(19) Europäisches Patentamt
European Patent Office
Office européen des brevets

(11) **EP 4 744 999 A2**

(12) **EUROPEAN PATENT APPLICATION**

(43) Date of publication:
**20.05.2026 Bulletin 2026/21**

(51) International Patent Classification (IPC):
**B60W 60/00** (2020.01)

(21) Application number: **25208468.6**

(22) Date of filing: **29.04.2022**

(52) Cooperative Patent Classification (CPC):
**B60W 60/0011; B60W 30/18163;** B60W 30/16;
B60W 2520/10; B60W 2554/804

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(62) Document number(s) of the earlier application(s) in
accordance with Art. 76 EPC:
**22939237.8 / 4 501 729**

(71) Applicant: **Shenzhen Yinwang Intelligent
Technologies Co., Ltd.
Shenzhen, Guangdong 518110 (CN)**

(72) Inventors:
• **LIANG, Yixiao
Shenzhen 518110 (CN)**
• **LIU, Donghao
Shenzhen 518110 (CN)**

• **LUO, Jie
Shenzhen 518110 (CN)**
• **ZHANG, Yongsheng
Shenzhen 518110 (CN)**

(74) Representative: **Gill Jennings & Every LLP
The Broadgate Tower
20 Primrose Street
London EC2A 2ES (GB)**

Remarks:
•This application was filed on 14-10-2025 as a
divisional application to the application mentioned
under INID code 62.
•Claims filed after the date of filing of the application
(Rule 68(4) EPC).

(54) **LANE CHANGE DECISION-MAKING METHOD AND APPARATUS, AND STORAGE MEDIUM**

(57) A lane changing decision-making method, a device and a storage medium, relating to the technical field of autonomous driving. The method can be applied to the fields of intelligent vehicles, new energy vehicles and the like, and comprises: on a first lane where a target vehicle is located, when there is a first obstacle in front of the target vehicle, acquiring longitudinal driving information of the target vehicle (201); when the longitudinal driving information meets a preset lane changing condition, perform lane changing, the preset lane changing condition comprising a first relative speed being less than zero and a second relative speed being less than zero, the first relative speed being a relative speed between a first speed and a set first expected speed, and the second relative speed being a relative speed between the first speed and a second expected speed (202). By means of the method, while satisfying safety, an intelligent vehicle can fully and visually reflect the intention and preference of a user, achieving personalized setting of the lane changing frequency, and improving the lane changing decision-making performance.

EP 4 744 999 A2

On a first lane on which a target vehicle is located, obtain longitudinal traveling information of the target vehicle when when there is a first obstacle in front of the target vehicle, where the longitudinal traveling information indicates traveling information of the target vehicle in a longitudinal direction, and the longitudinal direction is a direction parallel to a lane line of the first lane — 201

Perform lane change when the longitudinal traveling information meets a preset lane change condition, where the preset lane change condition includes: a first relative speed is less than zero and a second relative speed is less than zero, where the first relative speed is a relative speed between a first speed and a set first expected speed, the second relative speed is a relative speed between the first speed and a second expected speed, the first speed is a speed of the first obstacle in the longitudinal direction, and the second expected speed is a difference between the first expected speed and a set speed threshold — 202

FIG. 2

## Description

### TECHNICAL FIELD

This application relates to the field of autonomous driving technologies, and in particular, to a lane change decision-making method and apparatus, and a storage medium.

### BACKGROUND

With development of autonomous driving technologies, the autonomous driving technologies provide many conveniences for people to drive vehicles. Autonomous driving may mean that one or more autonomous driving modes are configured on a vehicle, and a driver selects an autonomous driving mode suitable for a current traveling scenario from the one or more autonomous driving modes based on a requirement of the driver, and triggers traveling of the vehicle based on the autonomous driving mode. Whether autonomous lane change of the vehicle can be implemented is considered as a core capability of a high-order autonomous driving technology.

Autonomous lane change of an intelligent vehicle involves perception, decision-making, planning, and control execution. Decision-making plays an important role in evaluating performance of autonomous lane change. Currently, lane change decision-making mainly includes rule-based lane change decision-making and learning-based lane change decision-making. Currently, compared with the rule-based lane change decision-making, the learning-based lane change decision-making is not ready for mass production and carrying due to restrictions of data, explainability, and black-box system security. However, there are many problems in the rule-based decision-making technology, including complex logic, a difficulty in reflecting a passenger's preference, a failure to consider both safety and efficiency, and the like.

Therefore, in a related technology, no proper and effective manner for implementing high-performance lane change decision-making is provided.

### SUMMARY

In view of this, a lane change decision-making method and apparatus, and a storage medium are provided. From a perspective of longitudinal control, an autonomous lane change policy of an autonomous driving vehicle is formulated, to help implement high-performance lane change decision-making, and satisfy a complex and dynamic vehicle traveling environment.

According to a first aspect, an embodiment of this application provides a lane change decision-making method. The method includes:

on a first lane on which a target vehicle is located, obtaining longitudinal traveling information of the target vehicle when there is a first obstacle in front of the target vehicle, where the longitudinal traveling information indicates traveling information of the target vehicle in a longitudinal direction, and the longitudinal direction is a direction parallel to a lane line of the first lane; and

performing lane change when the longitudinal traveling information meets a preset lane change condition.

The preset lane change condition includes: a first relative speed is less than zero and a second relative speed is less than zero, where the first relative speed is a relative speed between a first speed and a set first expected speed, the second relative speed is a relative speed between the first speed and a second expected speed, the first speed is a speed of the first obstacle in the longitudinal direction, and the second expected speed is a difference between the first expected speed and a set speed threshold.

In this implementation, on the first lane on which the target vehicle is located, the longitudinal traveling information of the target vehicle is obtained when there is the first obstacle in front of the target vehicle. The longitudinal traveling information indicates the traveling information of the target vehicle in the longitudinal direction, and the longitudinal direction is the direction parallel to the lane line of the first lane. When the longitudinal traveling information meets the preset lane change condition, lane change is performed. The preset lane change condition includes: the first relative speed is less than zero and the second relative speed is less than zero, the first relative speed is the relative speed between the first speed and the set first expected speed, the second relative speed is the relative speed between the first speed and the second expected speed, the first speed is the speed of the first obstacle in the longitudinal direction, and the second expected speed is the difference between the first expected speed and the set speed threshold. Because generation of a lane change behavior of a vehicle is closely related to a longitudinal motion, in this embodiment of this application, lane change decision-making and longitudinal control are fully coordinated and cooperated. To satisfy an intent of a user (a driver or a passenger), in an intelligent driving system that can implement autonomous lane change, the user autonomously sets the first expected speed and the speed threshold, so that the lane change decision-making solution provided in this embodiment of this application can fully and intuitively reflect the intent and a preference of the user, to implement personalized setting of a lane change frequency, improve lane change decision-making performance, and satisfy a complex and dynamic vehicle traveling environment.

In a possible implementation, the preset lane change condition further includes: there is a solution to a target function corresponding to a second lane that is to be changed to, where the target function is established based on a relative speed and a relative distance between the target vehicle and a second obstacle on the second lane in the longitudinal direction.

In this implementation, the preset lane change condition further includes: there is a solution to the target function corresponding to the second lane that is to be changed to, and the target function is established based on the relative speed and the relative distance between the target vehicle and the second obstacle on the second lane in the longitudinal direction. In this way, feasibility of lane change is subsequently determined, through longitudinal optimization control, based on whether there is a solution to the target function corresponding to the second lane, to provide reliable assurance for the lane change decision-making solution based on longitudinal control provided in this application.

In another possible implementation, the preset lane change condition further includes: an absolute value of a difference between a first longitudinal motion value and a second longitudinal motion value that are of the target vehicle is greater than a preset threshold.

The first longitudinal motion value is an actual value of a target motion parameter of the target vehicle on the first lane, the second longitudinal motion value is a virtual value of a target motion parameter of the target vehicle on the second lane, and the target motion parameter includes a motion parameter of the target vehicle in the longitudinal direction.

In this implementation, the preset lane change condition further includes: the absolute value of the difference between the first longitudinal motion value and the second longitudinal motion value that are of the target vehicle is greater than the preset threshold. To be specific, lane change necessity is determined by comparing the first longitudinal motion value of the target vehicle on the first lane with the second longitudinal motion value of the target vehicle on the second lane, to further improve lane change decision-making performance.

In another possible implementation, the target motion parameter includes an acceleration or a generalized force of the target vehicle in the longitudinal direction.

In this implementation, the lane change necessity determining condition may be determined based on whether the target vehicle can obtain a faster acceleration or a greater generalized force on the second lane than on the first lane. If the faster acceleration or the greater generalized force can be obtained, it indicates that the target vehicle can travel on the second lane at a speed closer to an expected speed, and have the lane change necessity. This avoids unnecessary lane change when a difference between accelerations or generalized forces on the first lane and the second lane is quite small, and improves traveling efficiency of the vehicle.

In another possible implementation, the method further includes:
when there is no solution to the target function, or the absolute value of the difference between the first longitudinal motion value and the second longitudinal motion value is less than or equal to the preset threshold, traveling in a preset following mode, where the preset following mode means that a distance between the target vehicle and the first obstacle on the first lane remains within a preset distance range.

In this implementation, when there is no solution to the target function, or the absolute value of the difference between the first longitudinal motion value and the second longitudinal motion value is less than or equal to the preset threshold, the preset following mode is used to travel. To be specific, when it is determined that a feasibility condition or necessity condition of lane change is not met, the target vehicle is controlled to travel following a preceding vehicle on the current first lane in the preset following mode, to ensure traveling safety and traveling efficiency of the vehicle.

In another possible implementation, the method further includes:
when there is no solution to the target function, or the absolute value of the difference between the first longitudinal motion value and the second longitudinal motion value is less than or equal to the preset threshold, performing a stop operation if the first obstacle on the first lane is a static obstacle.

In this implementation, when there is no solution to the target function, or the absolute value of the difference between the first longitudinal motion value and the second longitudinal motion value is less than or equal to the preset threshold, the stop operation is performed if the first obstacle on the first lane is a static obstacle. To be specific, when it is determined that the feasibility condition or necessity condition of lane change is not met, whether the first obstacle on the first lane is a static obstacle continues to be determined, and if the first obstacle on the first lane is a static obstacle, the stop operation is performed, to further ensure traveling safety of the vehicle.

In another possible implementation, the method further includes:

in a lane change process, solving the target function in real time or at a preset time interval; and
canceling lane change when there is no solution to the target function.

In this implementation, in the lane change process, lane change feasibility is still continuously checked. In terms of feasibility, once a feasibility determining condition is not met, that is, when there is no solution to the target function, lane change is canceled, to further improve lane change decision-making performance.

In another possible implementation, the method further includes:

in the lane change process, determining, in real time or at a preset time interval, whether a lane change cancellation condition is met; and

canceling lane change if the lane change cancellation condition is met.

The lane change cancellation condition includes:

the target vehicle is still on the first lane, and the absolute value of the difference between the second longitudinal motion value and the first longitudinal motion value is less than the preset threshold; and/or

the target vehicle has entered the second lane, a gravity center or a geometric center of the target vehicle has not entered the second lane, and the second longitudinal motion value is less than or equal to the first longitudinal motion value; and/or

the gravity center or the geometric center of the target vehicle has entered the second lane, and the absolute value of the difference between the first longitudinal motion value and the second longitudinal motion value is greater than or equal to the preset threshold.

In this implementation, in the lane change process, lane change necessity is still continuously checked. In terms of necessity, in different stages of lane change, necessity determining conditions, namely, the foregoing lane change cancellation conditions, are set to be different. Through such setting, when the lane change is closer to completion, the lane change cancellation condition is more strict. This complies with driving logic and traffic etiquette, and further improves lane change decision-making performance.

In another possible implementation, the preset lane change condition further includes: a first relative distance is less than or equal to a preset distance threshold, where the first relative distance is a relative distance between the target vehicle and the first obstacle on the first lane in the longitudinal direction.

In this implementation, when the first relative speed is less than zero and the second relative speed is less than zero, the relative distance between the target vehicle and the first obstacle on the first lane in the longitudinal direction, namely, the first relative distance, is further determined. When the first relative distance is less than or equal to the preset distance threshold, a lane change decision-making process is entered. This further ensures traveling safety and traveling efficiency of the vehicle.

In another possible implementation, the method further includes:
when the first relative distance is greater than the preset distance threshold, traveling in the preset following mode, where the preset following mode means that the distance between the target vehicle and the first obstacle remains within the preset distance range.

In this implementation, when the first relative speed is less than zero and the second relative speed is less than zero, the relative distance between the target vehicle and the first obstacle on the first lane is further determined, and when the relative distance is greater than the preset distance threshold, the preset following mode is used to travel. This avoids an unnecessary lane change behavior, and further ensures traveling efficiency of the vehicle.

In another possible implementation, the method further includes:
when the first relative speed is greater than or equal to zero, traveling at the first expected speed.

In this implementation, when the first relative speed is greater than or equal to zero, that is, when the first speed of the first obstacle in the longitudinal direction is greater than or equal to the first expected speed set by the target vehicle, the target vehicle still travels at the set first expected speed. To satisfy an intent of a user (a driver or a passenger), in an intelligent driving system that can implement autonomous lane change, the user autonomously sets the first expected speed, so that the lane change decision-making solution provided in this application can fully and intuitively reflect the intent and a preference of the user.

In another possible implementation, the method further includes:
when the first relative speed is less than zero and the second relative speed is greater than or equal to zero, traveling in the preset following mode, where the preset following mode means that the distance between the target vehicle and the first obstacle remains within the preset distance range.

In this implementation, when the first relative speed is less than zero and the second relative speed is greater than or equal to zero, that is, when the first speed of the first obstacle in the longitudinal direction is greater than or equal to the second expected speed of the target vehicle (the second expected speed is the difference between the first expected speed and the set speed threshold), the target vehicle travels following the first obstacle on the first lane in the preset following mode. In other words, the user may set the speed threshold, to implement personalized setting of the lane change frequency.

According to a second aspect, an embodiment of this application provides a lane change decision-making method. The method includes:

on a first lane on which a target vehicle is located, obtaining longitudinal traveling information of the target vehicle when there is a first obstacle in front of the target vehicle, where the longitudinal traveling information indicates traveling information of the target vehicle in a longitudinal direction, and the longitudinal direction is a direction parallel to a lane line of the first lane; and

performing lane change when the longitudinal traveling information meets a preset lane change condition, where the preset lane change condition includes: there is a solution to a target function corresponding to a second lane that is to be changed to, where the target function is established based on a relative speed and a relative distance between the target vehicle and a second obstacle on the second lane in the longitudinal direction.

In a possible implementation, the preset lane change condition further includes: an absolute value of a difference between a first longitudinal motion value and a second longitudinal motion value that are of the target vehicle is greater than a preset threshold.

The first longitudinal motion value is an actual value of a target motion parameter of the target vehicle on the first lane, the second longitudinal motion value is a virtual value of a target motion parameter of the target vehicle on the second lane, and the target motion parameter includes a motion parameter of the target vehicle in the longitudinal direction.

In another possible implementation, the target motion parameter includes an acceleration or a generalized force of the target vehicle in the longitudinal direction.

In another possible implementation, the method further includes:

when there is no solution to the target function, or the absolute value of the difference between the first longitudinal motion value and the second longitudinal motion value is less than or equal to the preset threshold, traveling in a preset following mode, where the preset following mode means that a distance between the target vehicle and the first obstacle on the first lane remains within a preset distance range.

In another possible implementation, the method further includes:

when there is no solution to the target function, or the absolute value of the difference between the first longitudinal motion value and the second longitudinal motion value is less than or equal to the preset threshold, performing a stop operation if the first obstacle on the first lane is a static obstacle.

In another possible implementation, the method further includes:

in a lane change process, solving the target function in real time or at a preset time interval; and canceling lane change when there is no solution to the target function.

In another possible implementation, the method further includes:

in the lane change process, determining, in real time or at a preset time interval, whether a lane change cancellation condition is met; and

canceling lane change if the lane change cancellation condition is met.

The lane change cancellation condition includes:

the target vehicle is still on the first lane, and the absolute value of the difference between the second longitudinal motion value and the first longitudinal motion value is less than the preset threshold; and/or

the target vehicle has entered the second lane, a gravity center or a geometric center of the target vehicle has not entered the second lane, and the second longitudinal motion value is less than or equal to the first longitudinal motion value; and/or

the gravity center or the geometric center of the target vehicle has entered the second lane, and the absolute value of the difference between the first longitudinal motion value and the second longitudinal motion value is greater than or equal to the preset threshold.

In another possible implementation, the method further includes:

obtaining a first speed of the first obstacle, where the first speed is a speed of the first obstacle in the longitudinal direction;

determining a first relative speed between the first speed and a set first expected speed and a second relative speed between the first speed and a second expected speed, where the second expected speed is a difference between the first expected speed and a set speed threshold; and

when the first relative speed is less than zero and the second relative speed is less than zero, performing the step of performing lane change when the longitudinal traveling information meets the preset lane change condition.

In another possible implementation, the method further includes:

when the first relative speed is less than zero and the second relative speed is less than zero, determining a first relative distance, where the first relative distance is a relative distance between the target vehicle and the first obstacle on the first lane in the longitudinal direction; and
when the first relative distance is less than or equal to a preset distance threshold, performing the step of performing lane change when the longitudinal traveling information meets the preset lane change condition.

In another possible implementation, the method further includes:
when the first relative distance is greater than the preset distance threshold, traveling in the preset following mode, where the preset following mode means that the distance between the target vehicle and the first obstacle remains within the preset distance range.
In another possible implementation, the method further includes:
when the first relative speed is greater than or equal to zero, traveling at the first expected speed.
In another possible implementation, the method further includes:
when the first relative speed is less than zero and the second relative speed is greater than or equal to zero, traveling in the preset following mode, where the preset following mode means that the distance between the target vehicle and the first obstacle remains within the preset distance range.
According to a third aspect, an embodiment of this application provides a lane change decision-making apparatus. The apparatus includes:

an obtaining unit, configured to: on a first lane on which a target vehicle is located, obtain longitudinal traveling information of the target vehicle when there is a first obstacle in front of the target vehicle, where the longitudinal traveling information indicates traveling information of the target vehicle in a longitudinal direction, and the longitudinal direction is a direction parallel to a lane line of the first lane; and
a lane change unit, configured to perform lane change when the longitudinal traveling information meets a preset lane change condition.

The preset lane change condition includes: a first relative speed is less than zero and a second relative speed is less than zero, where the first relative speed is a relative speed between a first speed and a set first expected speed, the second relative speed is a relative speed between the first speed and a second expected speed, the first speed is a speed of the first obstacle in the longitudinal direction, and the second expected speed is a difference between the first expected speed and a set speed threshold.
In a possible implementation, the preset lane change condition further includes: there is a solution to a target function corresponding to a second lane that is to be changed to, where the target function is established based on a relative speed and a relative distance between the target vehicle and a second obstacle on the second lane in the longitudinal direction.
In another possible implementation,
the preset lane change condition further includes: an absolute value of a difference between a first longitudinal motion value and a second longitudinal motion value that are of the target vehicle is greater than a preset threshold.
The first longitudinal motion value is an actual value of a target motion parameter of the target vehicle on the first lane, the second longitudinal motion value is a virtual value of a target motion parameter of the target vehicle on the second lane, and the target motion parameter includes a motion parameter of the target vehicle in the longitudinal direction.
In another possible implementation, the target motion parameter includes an acceleration or a generalized force of the target vehicle in the longitudinal direction.
In another possible implementation, the apparatus further includes:
a traveling unit, configured to: when there is no solution to the target function, or the absolute value of the difference between the first longitudinal motion value and the second longitudinal motion value is less than or equal to the preset threshold, travel in a preset following mode, where the preset following mode means that a distance between the target vehicle and the first obstacle on the first lane remains within a preset distance range.
In another possible implementation, the apparatus further includes:
a stopping unit, configured to: when there is no solution to the target function, or the absolute value of the difference between the first longitudinal motion value and the second longitudinal motion value is less than or equal to the preset threshold, perform a stop operation if the first obstacle on the first lane is a static obstacle.
In another possible implementation, the apparatus further includes a first lane change cancellation unit, configured to:

in a lane change process, solve the target function in real time or at a preset time interval; and

cancel lane change when there is no solution to the target function.

In another possible implementation, the apparatus further includes a second lane change cancellation unit, configured to:

in the lane change process, determine, in real time or at a preset time interval, whether a lane change cancellation condition is met; and
cancel lane change if the lane change cancellation condition is met.

The lane change cancellation condition includes:

the target vehicle is still on the first lane, and the absolute value of the difference between the second longitudinal motion value and the first longitudinal motion value is less than the preset threshold; and/or
the target vehicle has entered the second lane, a gravity center or a geometric center of the target vehicle has not entered the second lane, and the second longitudinal motion value is less than or equal to the first longitudinal motion value; and/or
the gravity center or the geometric center of the target vehicle has entered the second lane, and the absolute value of the difference between the first longitudinal motion value and the second longitudinal motion value is greater than or equal to the preset threshold.

In another possible implementation, the preset lane change condition further includes: a first relative distance is less than or equal to a preset distance threshold, where the first relative distance is a relative distance between the target vehicle and the first obstacle on the first lane in the longitudinal direction.
In another possible implementation, the apparatus further includes:
the traveling unit, configured to: when the first relative distance is greater than the preset distance threshold, travel in the preset following mode, where the preset following mode means that the distance between the target vehicle and the first obstacle remains within the preset distance range.
In another possible implementation, the apparatus further includes:
the traveling unit, configured to: when the first relative speed is greater than or equal to zero, travel at the first expected speed.
In another possible implementation, the apparatus further includes:
the traveling unit, configured to: when the first relative speed is less than zero and the second relative speed is greater than or equal to zero, travel in the preset following mode, where the preset following mode means that the distance between the target vehicle and the first obstacle remains within the preset distance range.
According to a fourth aspect, an embodiment of this application provides a lane change decision-making apparatus. The apparatus includes:

an obtaining unit, configured to: on a first lane on which a target vehicle is located, obtain longitudinal traveling information of the target vehicle when there is a first obstacle in front of the target vehicle, where the longitudinal traveling information indicates traveling information of the target vehicle in a longitudinal direction, and the longitudinal direction is a direction parallel to a lane line of the first lane; and
a lane change unit, configured to perform lane change when the longitudinal traveling information meets a preset lane change condition, where the preset lane change condition includes: there is a solution to a target function corresponding to a second lane that is to be changed to, where the target function is established based on a relative speed and a relative distance between the target vehicle and a second obstacle on the second lane in the longitudinal direction.

In a possible implementation, the preset lane change condition further includes: an absolute value of a difference between a first longitudinal motion value and a second longitudinal motion value that are of the target vehicle is greater than a preset threshold.
The first longitudinal motion value is an actual value of a target motion parameter of the target vehicle on the first lane, the second longitudinal motion value is a virtual value of a target motion parameter of the target vehicle on the second lane, and the target motion parameter includes a motion parameter of the target vehicle in the longitudinal direction.
In another possible implementation, the target motion parameter includes an acceleration or a generalized force of the target vehicle in the longitudinal direction.

In another possible implementation, the apparatus further includes:

a traveling unit, configured to: when there is no solution to the target function, or the absolute value of the difference between the first longitudinal motion value and the second longitudinal motion value is less than or equal to the preset threshold, travel in a preset following mode, where the preset following mode means that a distance between the target vehicle and the first obstacle on the first lane remains within a preset distance range.

In another possible implementation, the apparatus further includes:

a stopping unit, configured to: when there is no solution to the target function, or the absolute value of the difference between the first longitudinal motion value and the second longitudinal motion value is less than or equal to the preset threshold, perform a stop operation if the first obstacle on the first lane is a static obstacle.

In another possible implementation, the apparatus further includes a first lane change cancellation unit, configured to:

in a lane change process, solve the target function in real time or at a preset time interval; and
cancel lane change when there is no solution to the target function.

In another possible implementation, the apparatus further includes a second lane change cancellation unit, configured to:

in the lane change process, determine, in real time or at a preset time interval, whether a lane change cancellation condition is met; and
cancel lane change if the lane change cancellation condition is met.

The lane change cancellation condition includes:

the target vehicle is still on the first lane, and the absolute value of the difference between the second longitudinal motion value and the first longitudinal motion value is less than the preset threshold; and/or
the target vehicle has entered the second lane, a gravity center or a geometric center of the target vehicle has not entered the second lane, and the second longitudinal motion value is less than or equal to the first longitudinal motion value; and/or
the gravity center or the geometric center of the target vehicle has entered the second lane, and the absolute value of the difference between the first longitudinal motion value and the second longitudinal motion value is greater than or equal to the preset threshold.

In another possible implementation, the apparatus further includes the lane change unit, further configured to:

obtain a first speed of the first obstacle, where the first speed is a speed of the first obstacle in the longitudinal direction;
determine a first relative speed between the first speed and a set first expected speed and a second relative speed between the first speed and a second expected speed, where the second expected speed is a difference between the first expected speed and a set speed threshold; and
when the first relative speed is less than zero and the second relative speed is less than zero, perform the step of performing lane change when the longitudinal traveling information meets the preset lane change condition.

In another possible implementation, the apparatus further includes the lane change unit, further configured to:

when the first relative speed is less than zero and the second relative speed is less than zero, determine a first relative distance, where the first relative distance is a relative distance between the target vehicle and the first obstacle on the first lane in the longitudinal direction; and
when the first relative distance is less than or equal to a preset distance threshold, perform the step of performing lane change when the longitudinal traveling information meets the preset lane change condition.

In another possible implementation, the apparatus further includes:

the traveling unit, configured to: when the first relative distance is greater than the preset distance threshold, travel in the preset following mode, where the preset following mode means that the distance between the target vehicle and the first obstacle remains within the preset distance range.

In another possible implementation, the apparatus further includes:

the traveling unit, configured to: when the first relative speed is greater than or equal to zero, travel at the first expected speed.

In another possible implementation, the apparatus further includes:
the traveling unit, configured to: when the first relative speed is less than zero and the second relative speed is greater than or equal to zero, travel in the preset following mode, where the preset following mode means that the distance between the target vehicle and the first obstacle remains within the preset distance range.

According to a fifth aspect, an embodiment of this application provides a lane change decision-making apparatus. The apparatus includes:

a processor; and
a memory, configured to store instructions executable by the processor.

The processor is configured to implement the method provided in any one of the first aspect or the possible implementations of the first aspect when executing the instructions.

According to a sixth aspect, an embodiment of this application provides a lane change decision-making apparatus. The apparatus includes:

a processor; and
a memory, configured to store instructions executable by the processor.

The processor is configured to implement the method provided in any one of the second aspect or the possible implementations of the second aspect when executing the instructions.

According to a seventh aspect, an embodiment of this application provides a non-volatile computer-readable storage medium. The non-volatile computer-readable storage medium stores computer program instructions. When the computer program instructions are executed by a processor, the method provided in any one of the first aspect or the possible implementations of the first aspect is implemented.

According to an eighth aspect, an embodiment of this application provides a non-volatile computer-readable storage medium. The non-volatile computer-readable storage medium stores computer program instructions. When the computer program instructions are executed by a processor, the method provided in any one of the second aspect or the possible implementations of the second aspect is implemented.

According to a ninth aspect, an embodiment of this application provides a computer program product. The computer program product includes computer-readable code or a non-volatile computer-readable storage medium carrying the computer-readable code. When the computer-readable code is run in an electronic device, a processor in the electronic device performs the method provided in any one of the first aspect or the possible implementations of the first aspect.

According to a tenth aspect, an embodiment of this application provides a computer program product. The computer program product includes computer-readable code or a non-volatile computer-readable storage medium carrying the computer-readable code. When the computer-readable code is run in an electronic device, a processor in the electronic device performs the method provided in any one of the second aspect or the possible implementations of the second aspect.

According to an eleventh aspect, an embodiment of this application provides a vehicle. The vehicle includes:

a processor; and
a memory, configured to store instructions executable by the processor.

The processor is configured to implement the method provided in any one of the first aspect or the possible implementations of the first aspect when executing the instructions.

According to a twelfth aspect, an embodiment of this application provides a vehicle. The vehicle includes:

a processor; and
a memory, configured to store instructions executable by the processor.

The processor is configured to implement the method provided in any one of the second aspect or the possible implementations of the second aspect when executing the instructions.

## BRIEF DESCRIPTION OF DRAWINGS

The accompanying drawings included in this specification and constituting a part of this specification and this specification jointly show example embodiments, features, and aspects of this application, and are intended to explain the principles of this application.

FIG. 1 is a diagram of a structure of an electronic device according to an example embodiment of this application;

FIG. 2 is a flowchart of a lane change decision-making method according to an example embodiment of this application;

FIG. 3 is a flowchart of a lane change decision-making method according to another example embodiment of this application;

FIG. 4A and FIG. 4B are a flowchart of a lane change decision-making method according to another example embodiment of this application;

FIG. 5 is a diagram of a case in which there is no first obstacle on a current first lane of a current vehicle;

FIG. 6 is a diagram of a case in which there is a first obstacle on a current first lane of a current vehicle;

FIG. 7 is a diagram of a case in which there is an obstacle on each of a first lane and a second lane of a current vehicle;

FIG. 8 is a diagram in which decision-making planning during lane change may be implemented by using an enable signal based on longitudinal control;

FIG. 9 to FIG. 15 are diagrams of a lane change process of a current vehicle according to an example embodiment of this application;

FIG. 16 is a diagram of a lane change decision-making module according to an example embodiment of this application;

FIG. 17 is a block diagram of a lane change decision-making apparatus according to an example embodiment of this application; and

FIG. 18 is a block diagram of a lane change decision-making apparatus according to another example embodiment of this application.

## DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, embodiment or illustration". Any embodiment described as "exemplary" is not necessarily explained as being superior or better than other embodiments.

In addition, to better describe this application, numerous specific details are given in the following specific implementations. A person skilled in the art should understand that, this application may also be implemented without some specific details. In some instances, methods, means, elements, and circuits that are well-known to a person skilled in the art are not described in detail, so that a subject matter of this application is highlighted.

In a related technology, a lane change behavior of a vehicle may be classified into free lane change and forced lane change. In fact, regardless of whether the lane change behavior of the vehicle is free lane change or forced lane change, the lane change behavior of the vehicle is closely related to longitudinal motion. For example, free lane change is usually caused by the driver who is not satisfied with a traveling speed on a current lane, and forced lane change is caused by an infeasible case on the current lane ahead. Therefore, to achieve high-performance lane change decision-making, it is necessary to fully coordinate and cooperate lane change decision-making with longitudinal control. Therefore, an embodiment of this application provides an autonomous driving lane change decision-making method based on longitudinal control. From a perspective of longitudinal control, an autonomous lane change policy of an autonomous driving vehicle is formulated, to help resolve current problems and satisfy a complex and dynamic traveling environment.

First, an application scenario in this application is described.

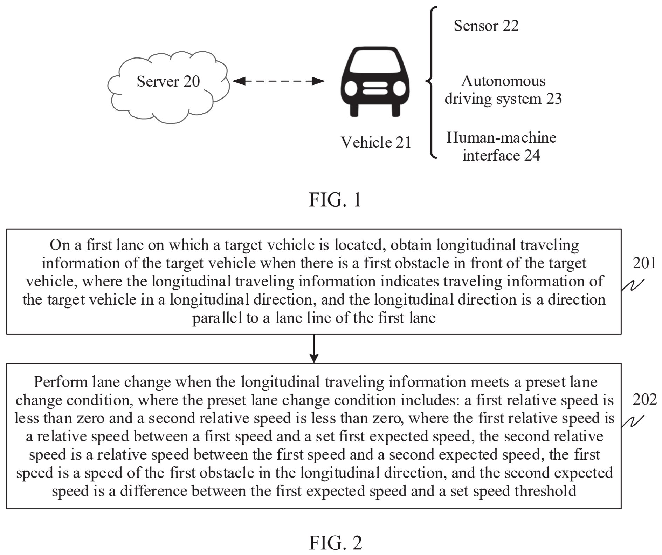

The method and the apparatus provided in embodiments of this application relate to an autonomous driving algorithm, and may be applied to the fields of an intelligent vehicle, a new energy vehicle, and the like. The following uses only an example in which the method provided in embodiments of this application is performed by an electronic device for description. FIG. 1 is a diagram of a structure of an electronic device according to an example embodiment of this application. The electronic device may be used in an autonomous driving (Autonomous Driving, AD) system or advanced driver assistance system (Advanced Driver Assistance System, ADAS) embedded platform. For example, the electronic device may be an autonomous driving domain controller or an ADAS domain controller. This is not limited in embodiments of this application.

The electronic device may be a vehicle 21 or a vehicle-mounted device on the vehicle 21. The vehicle 21 may be a vehicle having a wireless communication function. The wireless communication function may be disposed on a vehicle-mounted terminal, a vehicle-mounted module, a vehicle-mounted unit, a chip (system), or another component or assembly of the vehicle 21. The vehicle 21 in this embodiment of this application may be in an autonomous driving state. To be specific, the vehicle 21 drives fully autonomously, requiring no control or only a little control of a driver.

At least one sensor 22 may be further disposed on the vehicle 21, including a camera, a vehicle-mounted radar (for example, a millimeter-wave radar, a lidar (English: Laser Radar), and an ultrasonic radar), a rainfall sensor, a posture sensor (for example, a gyroscope), an inertial measurement unit (inertial measurement unit, IMU), a global navigation satellite system (global navigation satellite system, GNSS), and the like. The sensor 22 may be disposed on one vehicle 21, or may be disposed on a plurality of vehicles 21.

An autonomous driving system 23 may be further disposed on the vehicle 21. The autonomous driving system 23 may be configured to: generate, based on data collected by the sensor, an autonomous driving policy used to deal with a road condition, and implement autonomous driving of the vehicle 21 based on the generated policy.

In this embodiment of this application, the vehicle 21 is configured to: perform obstacle perception by using the at least one sensor 22, and determine whether there is, on a first lane on which the target vehicle is located, a first obstacle in front of a target vehicle. The vehicle 21 is further configured to: obtain longitudinal traveling information of the target vehicle by using the autonomous driving system 23 on the first lane when there is the first obstacle in front of the target vehicle, where the longitudinal traveling information indicates traveling information of the target vehicle in a longitudinal direction, and the longitudinal direction is a direction parallel to a lane line of the first lane; and perform lane change when the longitudinal traveling information meets a preset lane change condition, where the preset lane change condition includes: a first relative speed is less than zero and a second relative speed is less than zero, where the first relative speed is a relative speed between a first speed and a set first expected speed, the second relative speed is a relative speed between the first speed and a second expected speed, the first speed is a speed of the first obstacle in the longitudinal direction, and the second expected speed is a difference between the first expected speed and a set speed threshold.

A human-machine interface (human machine interface, HMI) 24 may be further disposed on the vehicle 21. The human-machine interface 24 may be configured to broadcast, in a visual icon or voice broadcasting manner, the policy used by the autonomous driving system 23 for the vehicle 21 and current road condition information.

In a possible implementation, the electronic device in this embodiment of this application may further include a server 20. The server 20 may be located on the vehicle 21 as a vehicle-mounted computing unit, or may be located on a cloud. The server may be a physical device, or may be a virtual device, for example, a virtual machine or a container, having a wireless communication function. For example, the server 20 is a virtual device provided through resource pooling (spatial decoupling) of servers at a plurality of locations. The wireless communication function may be disposed on a chip (system) or another component or assembly of the server 20. The server 20 and the vehicle 21 may communicate with each other in a wireless connection manner, for example, may communicate with each other by using a mobile communication technology like 2G/3G/4G/5G and in a wireless communication manner like Wi-Fi, Bluetooth, frequency modulation (frequency modulation, FM), a radio modem, or satellite communication. For example, in a test, the server 20 may be carried on the vehicle 21 and communicate with the vehicle 21 in the wireless connection manner. The server 20 may collect, through communication between the server 20 and the vehicle 21, data collected by a sensor on one or more vehicles 21 or a sensor disposed on a road or another place for calculation, and transmit a calculation result back to the corresponding vehicle 21.

The following describes, by using several example embodiments, the lane change decision-making method provided in embodiments of this application.

FIG. 2 is a flowchart of a lane change decision-making method according to an example embodiment of this application. In this embodiment, an example in which the method is applied to the electronic device shown in FIG. 1 is used for description. The method includes the following several steps.

Step 201: On a first lane on which a target vehicle is located, obtain longitudinal traveling information of the target vehicle when there is a first obstacle in front of the target vehicle, where the longitudinal traveling information indicates traveling information of the target vehicle in a longitudinal direction, and the longitudinal direction is a direction parallel to a lane line of the first lane.

The target vehicle is a vehicle in which the electronic device is located, and the target vehicle is also referred to as a current vehicle. The first lane is a lane on which the target vehicle is currently located, the first obstacle is an obstacle in front of the target vehicle on the first lane, and the front is a traveling direction of the target vehicle. A type of the first obstacle includes a dynamic obstacle and/or a static obstacle, for example, a moving or static vehicle, motorcycle, or bicycle. The type of the first obstacle is not limited in embodiments of this application.

Optionally, the electronic device performs obstacle perception by using a perception unit, and determines whether there is the first obstacle on the first lane. The perception unit may include a camera and/or a vehicle-mounted radar. The vehicle-mounted radar includes at least one of a millimeter-wave radar, a lidar, and an ultrasonic radar. The perception unit may further include at least one of a posture sensor, an inertial measurement unit, and a global navigation satellite system. This is not limited in embodiments of this application.

Optionally, when determining that there is the first obstacle on the first lane, the electronic device obtains the longitudinal traveling information of the target vehicle, where the longitudinal traveling information indicates the traveling information of the target vehicle in the longitudinal direction, and the longitudinal direction is the direction parallel to the lane line of the first lane.

Optionally, the longitudinal traveling information includes a first longitudinal motion value of the target vehicle, and the first longitudinal motion value is an actual value of a target motion parameter of the target vehicle on the first lane.

Optionally, the target motion parameter includes an acceleration or a generalized force of the target vehicle in the longitudinal direction. The generalized force of the target vehicle in the longitudinal direction includes a total longitudinal force and/or total driving torque, and driving torque is also referred to as braking torque.

Step 202: Perform lane change when the longitudinal traveling information meets a preset lane change condition, where the preset lane change condition includes: a first relative speed is less than zero and a second relative speed is less than zero, where the first relative speed is a relative speed between a first speed and a set first expected speed, the second relative speed is a relative speed between the first speed and a second expected speed, the first speed is a speed of the first obstacle in the longitudinal direction, and the second expected speed is a difference between the first expected speed and a set speed threshold.

Optionally, the electronic device determines whether the longitudinal traveling information meets the preset lane change condition. If the longitudinal traveling information meets the preset lane change condition, the electronic device performs lane change. If the longitudinal traveling information does not meet the preset lane change condition, the electronic device does not perform lane change, for example, travels in a preset following mode or performs a stop operation.

The preset lane change condition includes: the first relative speed is less than zero and the second relative speed is less than zero, the first relative speed is the relative speed between the first speed and the set first expected speed, the second relative speed is the relative speed between the first speed and the second expected speed, the first speed is the speed of the first obstacle in the longitudinal direction, and the second expected speed is the difference between the first expected speed and the set speed threshold.

Optionally, the preset lane change condition further includes a lane change feasibility condition, and the lane change feasibility condition includes: there is a solution to a target function corresponding to a second lane that is to be changed to.

Optionally, the target function is established based on a relative speed and a relative distance between the target vehicle and a second obstacle on the second lane in the longitudinal direction.

Optionally, in addition to the lane change feasibility condition, the preset lane change condition further includes a lane change necessity condition. To be specific, the preset lane change condition includes: there is a solution to the target function corresponding to the second lane that is to be changed to, and an absolute value of a difference between the first longitudinal motion value and a second longitudinal motion value that are of the target vehicle is greater than a preset threshold. The first longitudinal motion value is the actual value of the target motion parameter of the target vehicle on the first lane, the second longitudinal motion value is a virtual value of a target motion parameter of the target vehicle on the second lane, and the target motion parameter includes a motion parameter of the target vehicle in the longitudinal direction.

Optionally, the target motion parameter includes the acceleration or the generalized force of the target vehicle in the longitudinal direction.

It should be noted that for related details of lane change performed by the electronic device when the longitudinal traveling information meets the preset lane change condition, refer to related descriptions in the following embodiments. Details are not described herein.

In conclusion, in this embodiment of this application, on the first lane on which the target vehicle is located, the longitudinal traveling information of the target vehicle is obtained when there is the first obstacle in front of the target vehicle. The longitudinal traveling information indicates the traveling information of the target vehicle in the longitudinal direction, and the longitudinal direction is the direction parallel to the lane line of the first lane. When the longitudinal traveling information meets the preset lane change condition, lane change is performed. The preset lane change condition includes: the first relative speed is less than zero and the second relative speed is less than zero, the first relative speed is the relative speed between the first speed and the set first expected speed, the second relative speed is the relative speed between the first speed and the second expected speed, the first speed is the speed of the first obstacle in the longitudinal direction, and the second expected speed is the difference between the first expected speed and the set speed threshold. Because generation of a lane change behavior of a vehicle is closely related to a longitudinal motion, in this embodiment of this application, lane change decision-making and longitudinal control are fully coordinated and cooperated. To satisfy an intent of a user (a driver or a passenger), in an intelligent driving system that can implement autonomous lane change, the user autonomously sets the first expected speed and the speed threshold, so that the lane change decision-making solution provided in this embodiment of this application can fully and intuitively reflect the intent and a preference of the user, to implement personalized setting of a lane change frequency, improve lane change decision-making performance, and satisfy a complex and dynamic vehicle traveling environment.

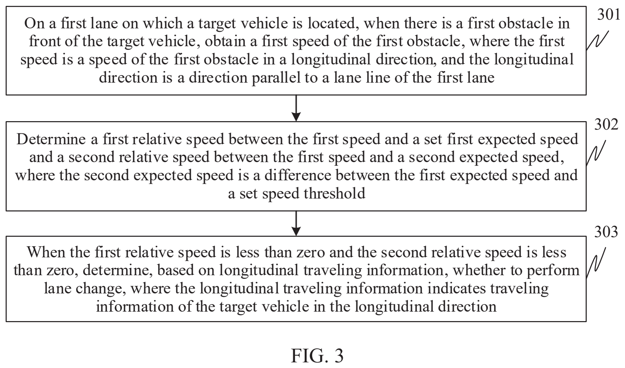

FIG. 3 is a flowchart of a lane change decision-making method according to another example embodiment of this application. In this embodiment, an example in which the method is applied to the electronic device shown in FIG. 1 is used for description. The method includes the following several steps.

Step 301: On a first lane on which a target vehicle is located, when there is a first obstacle in front of the target vehicle, obtain a first speed of the first obstacle, where the first speed is a speed of the first obstacle in a longitudinal direction, and the longitudinal direction is a direction parallel to a lane line of the first lane.

Optionally, the electronic device performs obstacle perception by using a perception unit, and determines whether there is the first obstacle on the first lane. When it is determined that there is the first obstacle on the current first lane of the target vehicle, the first speed of the first obstacle is obtained.

Step 302: Determine a first relative speed between the first speed and a set first expected speed and a second relative speed between the first speed and a second expected speed, where the second expected speed is a difference between the first expected speed and a set speed threshold.

Optionally, the first expected speed is customized, or is set by default. For example, after a system is started, a user (a driver/a passenger) customizes the first expected speed. For another example, if the user does not customize the first expected speed, the first expected speed is set as a speed limit of the first lane by default.

Optionally, the speed threshold is customized, or is set by default. The speed threshold of the target vehicle indicates a lane change frequency of the target vehicle. The speed threshold is in negative correlation with the lane change frequency. To be specific, a smaller speed threshold indicates a higher lane change frequency; and a larger speed threshold indicates a lower lane change frequency, and the vehicle tends to stay on the current lane to travel. For example, if the user does not customize the speed threshold, the speed threshold is set to x times a first traveling speed by default, where x is a positive number less than 1. For another example, the user customizes a speed threshold less than the first traveling speed, or sets a proportionality coefficient (namely, a value of x) between 0 and 1. For example, the value of x is from 0.2 to 0.3. This is not limited in embodiments of this application.

Optionally, after determining that there is the first obstacle on the current first lane of the target vehicle, the electronic device determines the first relative speed and the second relative speed, where the first relative speed is a difference between the first speed and the set first expected speed, and the second relative speed is a difference between the first speed and the second expected speed.

Step 303: When the first relative speed is less than zero and the second relative speed is less than zero, determine, based on longitudinal traveling information, whether to perform lane change, where the longitudinal traveling information indicates traveling information of the target vehicle in the longitudinal direction.

When the first relative speed is less than zero, it indicates that a speed (namely, the first speed) of the first obstacle in the longitudinal direction is less than the first expected speed of the target vehicle; and when the second relative speed is less than zero, it indicates that the speed (namely, the first speed) of the first obstacle in the longitudinal direction is less than the second expected speed (namely, the difference between the first expected speed and the set speed threshold).

When determining that the first relative speed is less than zero and the second relative speed is less than zero, the electronic device enters a lane change decision-making process, that is, starts to consider a lane change behavior, and determines, based on the longitudinal traveling information, whether to perform lane change. Optionally, the determining, based on the longitudinal traveling information, whether to perform lane change includes: performing lane change when the longitudinal traveling information meets another preset lane change condition, where the another preset lane change condition includes: there is a solution to a target function corresponding to a second lane that is to be changed to.

Optionally, the target function is established based on a relative speed and a relative distance between the target vehicle and a second obstacle on the second lane in the longitudinal direction.

Optionally, the another preset lane change condition further includes: an absolute value of a difference between a first longitudinal motion value and a second longitudinal motion value that are of the target vehicle is greater than a preset threshold. The first longitudinal motion value is an actual value of a target motion parameter of the target vehicle on the first lane, the second longitudinal motion value is a virtual value of a target motion parameter of the target vehicle on the second lane, and the target motion parameter includes a motion parameter of the target vehicle in the longitudinal direction.

Optionally, the target motion parameter includes an acceleration or a generalized force of the target vehicle in the longitudinal direction.

It should be noted that for related details of determining, by the electronic device based on the longitudinal traveling information, whether to perform lane change, refer to related descriptions in the following embodiments. Details are not described herein.

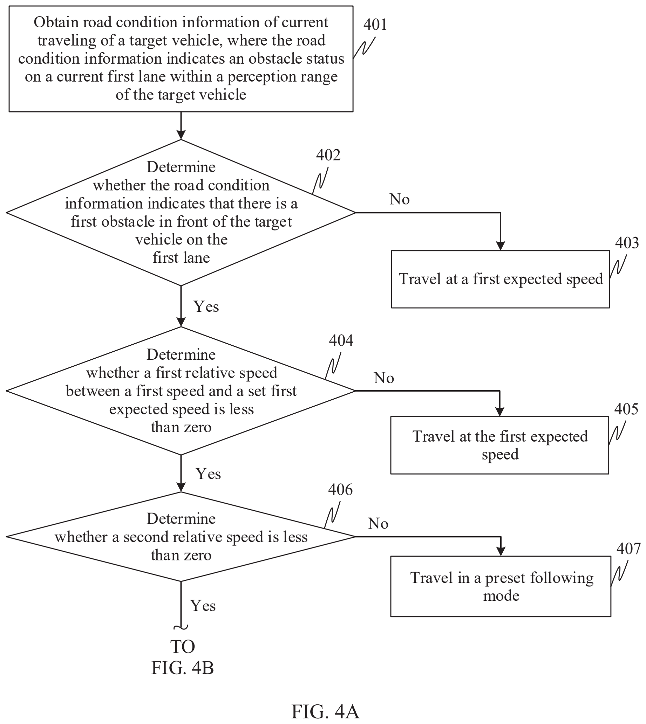

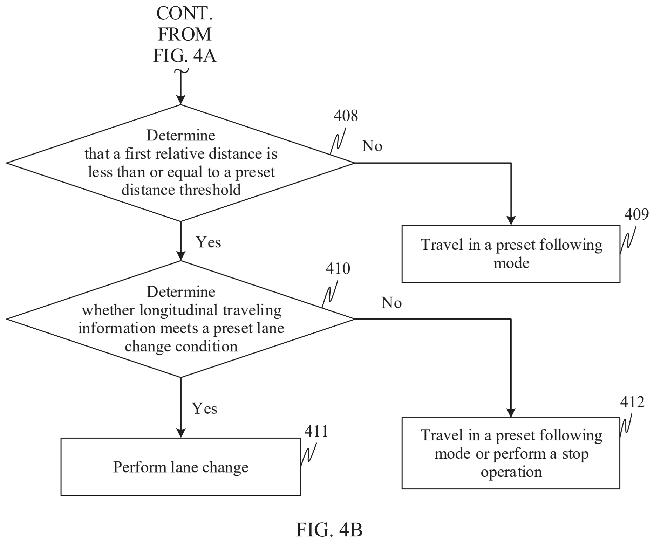

FIG. 4A and FIG. 4B are a flowchart of a lane change decision-making method according to another example embodiment of this application. In this embodiment, an example in which the method is applied to the electronic device shown in FIG. 1 is used for description. The method includes the following several steps.

Step 401: Obtain road condition information of current traveling of a target vehicle, where the road condition information indicates an obstacle status on a current first lane within a perception range of the target vehicle.

Optionally, in a traveling process of the vehicle, the electronic device detects an ambient environment by using a perception unit in real time or at a preset time interval, to obtain the road condition information of current traveling of the target vehicle.

The road condition information indicates the obstacle status on the current first lane within the perception range of the target vehicle.

Optionally, the road condition information includes a first identifier. When the first identifier is a first value, it indicates that there is a first obstacle on the current first lane of the target vehicle. When the first identifier is a second value, it indicates that there is no first obstacle on the current first lane of the target vehicle.

Optionally, when the road condition information indicates that there is the first obstacle on the current first lane of the target vehicle, the road condition information further includes a first speed of the first obstacle. The first speed is a speed of the first obstacle in a longitudinal direction, and the longitudinal direction is a direction parallel to a lane line of the first lane.

Step 402: Determine whether the road condition information indicates that there is the first obstacle in front of the target vehicle on the first lane.

The electronic device determines whether the road condition information indicates that there is the first obstacle in front of the target vehicle on the first lane on which the target vehicle is located. If the road condition information indicates that there is no first obstacle in front of the target vehicle on the first lane, step 403 is performed. If the road condition information indicates that there is the first obstacle in front of the target vehicle on the first lane, step 404 is performed.

Step 403: Travel at a first expected speed when there is no first obstacle in front of the target vehicle on the first lane.

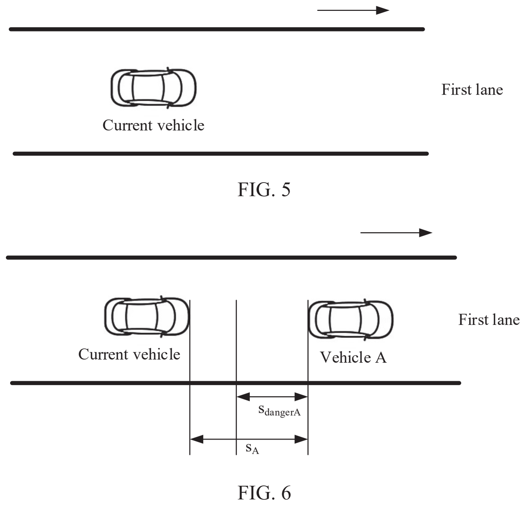

Optionally, when there is no first obstacle on the current first lane of the target vehicle, the electronic device travels based on a control value until the target vehicle travels at the first expected speed. For example, the control value is an acceleration or a generalized force of the target vehicle in the longitudinal direction. In an example, FIG. 5 shows a case in which there is no first obstacle on a current first lane of a current vehicle.

For example, the control value is the acceleration of the target vehicle in the longitudinal direction. In this case, a to-be-optimized first target function $J_{x1}$ is shown as follows:

$$J_{x1} = (V_x - V_{xdes})^T Q_v (V_x - V_{xdes}) + a_x^T R a_x$$

Herein, $V_{xdes}$ is the first expected speed of the target vehicle, $V_x$ is the first speed of the target vehicle, the control value is the acceleration $a_x$ of the target vehicle in the longitudinal direction, $Q_v$ is a preset first weight (namely, a weight corresponding to a speed), and R is a preset third weight (namely, a weight corresponding to the control value).

The foregoing formula of the first target function is a standard form of an optimization equation, and an optimization objective is to calculate a corresponding control value, so that a value of the first target function $J_{x1}$ on a left side of the equal sign is as small as possible. An objective of a first item "$(V_x - V_{xdes})^T Q_v (V_x - V_{xdes})$" on a right side of the formula is to make an actual speed of the target vehicle close to the set first expected speed as much as possible. A second item "$a_x^T R a_x$" on the right side of the formula is a constraint on the control value, and an objective of which is to avoid an excessively large control value or an excessively fast change.

It should be noted that, for ease of description, in this embodiment of this application, target functions are described by using only an example in which the control value is the acceleration of the target vehicle in the longitudinal direction. Alternatively, the control value may be the generalized force of the target vehicle in the longitudinal direction, for example, a total longitudinal force and/or total driving torque.

It should be further noted that a model predictive controller is recommended for a controller in this embodiment of this application, but another generalized optimization control method is also applicable.

Optionally, a discrete mathematical model of the control algorithm is shown as follows:

$$ds_i(k + 1) = ds_i(k) + V_x(k)\Delta t - V_i(k)\Delta t - \frac{1}{2}a_x(k)\Delta t^2 + \frac{1}{2}a_i(k)\Delta t^2;$$

and

$$V_x(k + 1) = V_x(k) + a_x(k)\Delta t$$

Herein, $d_{si}$ is a relative distance between the target vehicle and an $i^{th}$ obstacle at a moment k, and $V_i$ is a speed of the $i^{th}$ obstacle at the moment k. Therefore, the relative speed at the moment k may be written as $dV_i(k)=V_i(t)-V_x(k)$. The first formula of the discrete mathematical model indicates a relationship between a relative distance between the target vehicle and the $i^{th}$ obstacle at a moment k+1 and the relative distance between the target vehicle and the $i^{th}$ obstacle at the moment k, and speeds and accelerations of the target vehicle and the $i^{th}$ obstacle. The second formula indicates a relationship between the speed and the acceleration of the target vehicle.

It should be noted that in this embodiment of this application, the speed is a speed in the longitudinal direction, and the acceleration is an acceleration in the longitudinal direction.

An obstacle may be the first obstacle of the target vehicle, or may be an obstacle behind the target vehicle. The obstacle is also referred to as a road traffic participant.

Step 404: When there is the first obstacle in front of the target vehicle on the first lane, determine whether the first relative speed between the first speed and the set first expected speed is less than zero.

Optionally, when the road condition information indicates that there is the first obstacle in front of the target vehicle on the first lane on which the target vehicle is located, the road condition information further includes the first speed of the first obstacle. The electronic device determines the first relative speed between the first speed and the set first expected speed, and determines whether the first relative speed is less than zero. If the first relative speed is greater than or equal to zero, step 405 is performed; or if the first relative speed is less than zero, step 406 is performed.

Step 405: When the first relative speed is greater than or equal to zero, travel at the first expected speed.

If the first relative speed is greater than or equal to zero, to be specific, the speed (namely, the first speed) of the first obstacle in the longitudinal direction is greater than or equal to the first expected speed of the target vehicle, the target vehicle still travels at the set first expected speed.

In an example, FIG. 6 shows a case in which there is the first obstacle on the current first lane of the current vehicle. The first obstacle is a vehicle A, $s_A$ is a relative distance between the current vehicle and the vehicle A, and $s_{dangerA}$ is a set safe distance between the current vehicle and the vehicle A.

In this case, a to-be-optimized second target function $J_{x2}$ is shown as follows:

$$J_{x2} = (V_x - V_{xdes})^T Q_v (V - V_{xdes}) + d(1/s_A)^T Q_s d(1/s_A) + a_x^T R a_x.$$

A constraint of the second target function $I_{x2}$ is $s_A \geq s_{dangerA}$. $V_{xdes}$ is the first expected speed of the target vehicle, $V_x$ is the first speed of the target vehicle, the control value is the acceleration $a_x$ of the target vehicle in the longitudinal direction, $Q_v$ is the preset first weight, $Q_s$ is a preset second weight (namely, a weight corresponding to a distance), R is the preset third weight, and $s_A$ is a relative distance between the target vehicle and the first obstacle on the current first lane. $s_{dangerA}$ is a set safe distance between the target vehicle and the first obstacle on the current first lane, and this value may be set to a function of the speed of the target vehicle. The second item "$d(1/s_A)^T Q_s d(1/s_A)$" on a right side of the formula is an added item, and is mainly used to prevent the relative distance $s_A$ from being always small. A case reflected in reality is that the target vehicle is prevented from tending to maintain a distance from the first obstacle at a danger constraint edge. In addition, a constraint is added to the second target function $J_{x2}$, to restrict a relative distance for the target vehicle to track the first obstacle, and avoid a possible danger caused by an excessively small relative distance.

Step 406: When the first relative speed is less than zero, determine whether the second relative speed is less than zero.

If the first relative speed is less than zero, to be specific, the speed (namely, the first speed) of the first obstacle in the longitudinal direction is less than the first expected speed of the target vehicle, the electronic device determines whether the second relative speed is greater than or equal to zero. If the second relative speed is greater than or equal to zero, step 407 is performed. If the second relative speed is less than zero, step 408 is performed.

Step 407: When the second relative speed is greater than or equal to zero, travel in a preset following mode.

The preset following mode means that a distance between the target vehicle and the first obstacle remains within a preset distance range.

When the second relative speed is greater than or equal to zero, to be specific, the speed (namely, the first speed) of the first obstacle in the longitudinal direction is greater than or equal to the second expected speed (namely, a difference between the first expected speed and a set speed threshold), the electronic device travels in the preset following mode. For example, the preset following mode is a following mode of an adaptive cruise control (Adaptive Cruise Control, ACC) system. In this case, a to-be-optimized third target function $J_{x3}$ is shown as follows:

$$J_{x3} = (V_x - V_A)^T Q_v (V_x - V_A) + d(1/s_A)^T Q_s d(1/s_A) + a_x^T R a_x$$

A constraint of the third target function $J_{x3}$ is $s_A \geq s_{dangerA}$. $V_A$ is the speed of the first obstacle (for example, the vehicle A) of the target vehicle in the longitudinal direction, $V_x$ is the first speed of the target vehicle, the control value is the acceleration $a_x$ of the target vehicle in the longitudinal direction, $Q_v$ is the preset first weight, $Q_s$ is the preset second weight, R is the preset third weight, and $s_A$ is the relative distance between the target vehicle and the current first obstacle on the first lane. $s_{dangerA}$ is a set safe distance between the target vehicle and the first obstacle on the current first lane, and this value may be set to a function of the speed of the target vehicle.

Step 408: When the second relative speed is less than zero, determine that a first relative distance is less than or equal to a preset distance threshold.

The first relative distance is a relative distance between the target vehicle and the first obstacle on the first lane in the longitudinal direction.

When the second relative speed is less than zero, to be specific, the speed (namely, the first speed) of the first obstacle in the longitudinal direction is less than the second expected speed (namely, the difference between the first expected speed and the set speed threshold), the electronic device enters a lane change decision-making process, that is, starts to consider a lane change behavior. In this case, a to-be-optimized fourth target function is solved on both the current first lane and a second lane that is to be changed to. If the target vehicle is currently on a middle lane, both a left lane and a right lane are the second lanes that are to be changed to; if the target vehicle is on a rightmost lane, a left lane is the second lane that is to be changed to; or if the target vehicle is on a leftmost lane, a right lane is the second lane that is to be changed to.

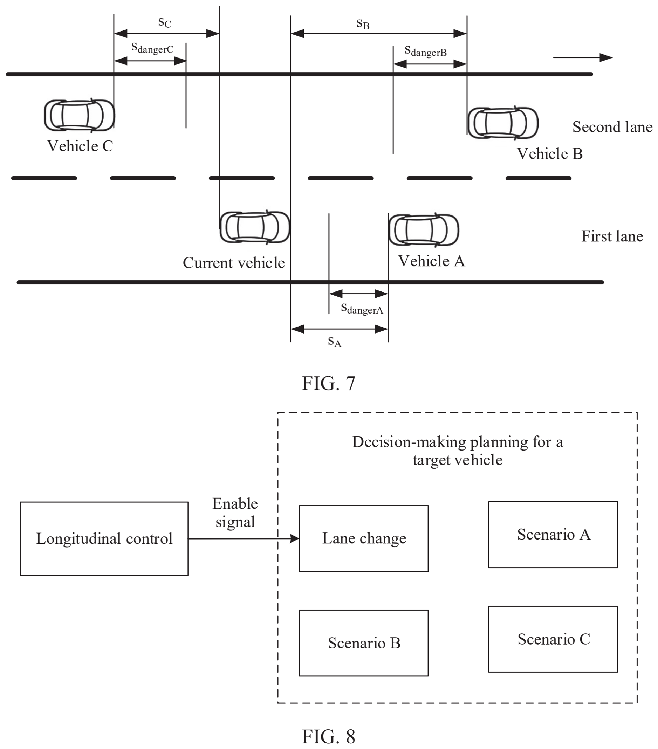

In an example, FIG. 7 shows a case in which there is an obstacle on each of the first lane and the second lane of the current vehicle. The first obstacle on the first lane is the vehicle A, $s_A$ is the relative distance between the current vehicle and the vehicle A, and $s_{dangerA}$ is the set safe distance between the current vehicle and the vehicle A. A first obstacle on the second lane that is to be changed to is a vehicle B, $s_B$ is a relative distance between the current vehicle and the vehicle B, and $s_{dangerB}$ is a set safe distance between the current vehicle and the vehicle A. A rear obstacle on the second lane that is to be changed to is a vehicle C, sc is a relative distance between the current vehicle and the vehicle C, sc is determined based on a relative distance between the vehicle B and the vehicle C, to be specific, sc is a value obtained by subtracting $s_B$ and a length of the current vehicle from the relative distance between the vehicle B and the vehicle C, and $s_{dangerC}$ is a set safe distance between the current vehicle and the vehicle C.

In this case, the fourth target function $J_{x4}$ and a fifth target function $J_{x4\_target}$ that are to be optimized are shown as follows:

$$J_{x4} = (V_x - V_{xdes})^T Q_v (V_x - V_{xdes}) + d(1/s_A)^T Q_s d(1/s_A) + a_x^T R a_x$$

$$J_{x4\_target} = (V_x - V_{xdes})^T Q_v (V - V_{des}) + d(1/s_B)^T Q_s d(1/s_B) + a_{x\_target}^T R a_{x\_target}$$

Constraints of the foregoing functions are $s_A \geq s_{dangerA}$, $s_B \geq s_{dangerB}$, and $s_C \geq s_{dangerC}$.

Herein, $s_B$ is a relative distance between the target vehicle and the first obstacle on the second lane, and $s_{dangerB}$ is a set safe distance between the target vehicle and the first obstacle on the second lane, where this value may be set to a function of the speed of the target vehicle; sc is a relative distance between the target vehicle and the rear obstacle on the second lane, and $s_{dangerC}$ is a set safe distance between the target vehicle and the rear obstacle on the second lane; and $a_{x\_target}$ is a set virtual acceleration that is to be calculated and that is of the target vehicle on the second lane. For meanings of other parameters, refer to descriptions of related parameters in other formulas described above. Details are not described herein again.

An objective of optimizing the fourth target function $J_{x4}$ is to calculate an actual acceleration of the target vehicle on the first lane, and an objective of optimizing $J_{x4\_target}$ is to calculate the virtual acceleration of the target vehicle on the second lane. When a target function corresponding to the second lane is solved, a virtual location of the target vehicle on the second lane is parallel to an actual location of the target vehicle on the current first lane.

Optionally, when determining that the second relative speed is less than zero, the electronic device may directly enter the lane change decision-making process, that is, perform a step of determining whether longitudinal traveling information meets a preset lane change condition. Alternatively, before entering the lane change decision-making process, the electronic device may determine whether the relative distance between the target vehicle and the first obstacle on the first lane is less than or equal to the preset distance threshold. If the relative distance is greater than the preset distance threshold, step 409 is performed. If the relative distance is less than or equal to the preset distance threshold, step 410 is performed.

Step 409: When the first relative distance is greater than the preset distance threshold, travel in the preset following mode.

When the relative distance between the target vehicle and the first obstacle on the first lane in the longitudinal direction, namely, the first relative distance, is greater than the preset distance threshold, in other words, the target vehicle is far away from the first obstacle on the first lane, to avoid an unnecessary lane change behavior, the electronic device may travel in the preset following mode.

The preset distance threshold is customized, or is set by default. This is not limited in embodiments of this application.

Step 410: When the first relative distance is less than or equal to the preset distance threshold, determine whether the longitudinal traveling information meets the preset lane change condition.

When the relative distance between the target vehicle and the first obstacle on the first lane in the longitudinal direction, namely, the first relative distance, is less than or equal to the preset distance threshold, in other words, the target vehicle is close to the first obstacle on the first lane, the electronic device enters a lane change decision-making process based on longitudinal control to obtain the longitudinal traveling information of the target vehicle, and determines whether the longitudinal traveling information meets the preset lane change condition. If the longitudinal traveling information meets the preset lane change condition, step 411 is performed. If the longitudinal traveling information does not meet the preset lane change condition, step 412 is performed.

The preset lane change condition includes at least a lane change feasibility condition, and the lane change feasibility condition includes: there is a solution to the target function corresponding to the second lane that is to be changed to. In other words, if there is a solution to the target function corresponding to the second lane that is to be changed to, it indicates that a lane change behavior of the target vehicle changing from the first lane to the second lane meets the feasibility condition. If there is no solution to the target function corresponding to the second lane that is to be changed to, it indicates that the lane change behavior of the target vehicle changing from the first lane to the second lane does not meet the feasibility condition.

Optionally, the target function corresponding to the second lane is established based on a relative speed and a relative distance between the target vehicle and a second obstacle on the second lane in the longitudinal direction.

For example, the second obstacle on the second lane includes the first obstacle on the second lane and the rear obstacle on the second lane, and the target function corresponding to the second lane is established based on a relative speed and a relative distance between the target vehicle and the first obstacle on the second lane in the longitudinal direction, and a relative speed and a relative distance between the target vehicle and the rear obstacle on the second lane in the longitudinal direction.

In a possible implementation, the target function corresponding to the second lane is the foregoing fifth target function $J_{x4\_target}$.

Optionally, in addition to the lane change feasibility condition, the preset lane change condition further includes a lane change necessity condition. To be specific, the preset lane change condition includes: there is a solution to the target function corresponding to the second lane that is to be changed to, and an absolute value of a difference between a first longitudinal motion value and a second longitudinal motion value that are of the target vehicle is greater than a preset threshold. The first longitudinal motion value is an actual value of a target motion parameter of the target vehicle on the first lane, the second longitudinal motion value is a virtual value of a target motion parameter of the target vehicle on the second lane, and the target motion parameter includes a motion parameter of the target vehicle in the longitudinal direction. In other words, if the absolute value of the difference between the first longitudinal motion value and the second longitudinal motion value that are of the target vehicle is greater than the preset threshold, it indicates that the target vehicle can travel at a speed closer to the first expected speed on the second lane, and the lane change behavior of the target vehicle changing from the first lane to the second lane meets the necessary condition. If the absolute value of the difference between the first longitudinal motion value and the second longitudinal motion value that are of the target vehicle is less than or equal to the preset threshold, it indicates that the target vehicle cannot travel at a speed closer to the first expected speed on the second lane than on the first lane, and the lane change behavior of the target vehicle changing from the first lane to the second lane does not meet the necessity condition.

For example, if the target motion parameter includes the acceleration of the target vehicle in the longitudinal direction, the preset lane change condition includes that there is a solution to the target function corresponding to the second lane that is to be changed to, and an absolute value of a difference between the actual acceleration of the target vehicle on the first lane and the virtual acceleration of the target vehicle on the second lane is greater than the preset threshold.

For example, if the target motion parameter includes the generalized force of the target vehicle in the longitudinal direction, the preset lane change condition includes that there is a solution to the target function corresponding to the second lane that is to be changed to, and an absolute value of a difference between an actual generalized force of the target vehicle on the first lane and a virtual generalized force of the target vehicle on the second lane is greater than the preset threshold.

The preset threshold is customized, or is set by default. For example, the preset threshold is a value greater than 0, to mainly avoid unnecessary lane change because the absolute value of the difference between the first longitudinal motion value and the second longitudinal motion value is quite small. This is not limited in embodiments of this application.

Step 411: Perform lane change when the longitudinal traveling information meets the preset lane change condition.

Optionally, when the longitudinal traveling information meets the lane change feasibility condition and the lane change necessity condition, the electronic device performs lane change.

Step 412: When the longitudinal traveling information does not meet the preset lane change condition, travel in the preset following mode or perform a stop operation.

Optionally, when the longitudinal traveling information does not meet the lane change feasibility condition or the lane change necessity condition, the electronic device travels in the preset following mode or performs the stop operation.

It should be noted that, that the electronic device determines the lane change feasibility condition and determines the lane change necessity condition may be performed in sequence, or may be performed in parallel. This is not limited in embodiments of this application.

Optionally, the electronic device determines whether there is a solution to the target function corresponding to the second lane that is to be changed to, and if there is a solution to the target function corresponding to the second lane, determines that the absolute value of the difference between the first longitudinal motion value and the second longitudinal motion value of the target vehicle is greater than the preset threshold. When the absolute value of the difference between the first longitudinal motion value and the second longitudinal motion value that are of the target vehicle is greater than the preset threshold, the electronic device performs lane change. When there is no solution to the target function, or the absolute value of the difference between the first longitudinal motion value and the second longitudinal motion value is less than or equal to the preset threshold, the electronic device travels in the preset following mode.

Optionally, when there is no solution to the target function, or the absolute value of the difference between the first longitudinal motion value and the second longitudinal motion value is less than or equal to the preset threshold, if the first obstacle on the first lane is a static obstacle, the electronic device performs the stop operation.

In an example, as shown in FIG. 8, decision-making planning for the target vehicle may include a lane change scenario and another scenario irrelevant to lane change (only a scenario A, a scenario B, and a scenario C are shown as examples in the figure). For example, the another scenario irrelevant to lane change includes a left turning scenario, a right turning scenario, and the like. The target vehicle uses the lane change decision-making method based on longitudinal control provided in this embodiment of this application, to implement lane change decision-making planning by using an enable signal based on longitudinal control when determining to perform lane change.

In conclusion, this embodiment of this application provides a lane change decision-making method based on longitudinal control for an intelligent vehicle, so that the intelligent vehicle can travel by using an autonomous lane change policy at a first expected speed set by a driver/passenger as much as possible while satisfying safety, efficiency, and good experience.

In a possible implementation, after traveling in the preset following mode or performing the stop operation, the electronic device still iteratively checks lane change feasibility and necessity. Optionally, the electronic device checks the lane change feasibility and necessity in real time or at a preset time interval. In this case, a sixth target function $J_{x5}$ and a seventh target function $J_{x5\_target}$ that are to be optimized are shown in the following formulas:

$$J_{x5} = (V_x - V_A)^T Q_v (V - V_A) + d(1/s_A)^T Q_s d(1/s_A) + a_x^T R a_x;$$

and

$$J_{x5\_target} = (V_x - V_{xdes})^T Q_v (V - V_{xdes}) + d(1/s_B)^T Q_s d(1/s_B)$$
$$+ a_{x\_target}^T R a_{x\_target}$$

Constraints are as follows: $s_A \geq s_{dangerA}$, $s_B \geq s_{dangerB}$, and $s_C \geq s_{gangerC}$

It should be noted that for meanings of the parameters in the formulas, refer to descriptions of related parameters in other formulas described above. Details are not described herein again.

In another possible implementation, after performing lane change, the electronic device still iteratively checks the lane change feasibility and necessity in a lane change process.

Optionally, in terms of the lane change feasibility, in the lane change process, the electronic device solves the target function in real time or at a preset time interval; and cancels lane change when there is no solution to the target function.

Optionally, in terms of the lane change necessity, the electronic device has different necessity determining conditions, namely, lane change cancellation conditions, in different lane change phases. To be specific, in the lane change process, the electronic device determines, in real time or at a preset time interval, whether a lane change cancellation condition is met; and cancels lane change if the lane change cancellation condition is met. The lane change cancellation condition relates to but is not limited to the following several possible cases.

In a first case, the target vehicle is still on the first lane. In this case, the lane change cancellation condition includes that the absolute value of the difference between the second longitudinal motion value and the first longitudinal motion value is less than the preset threshold.

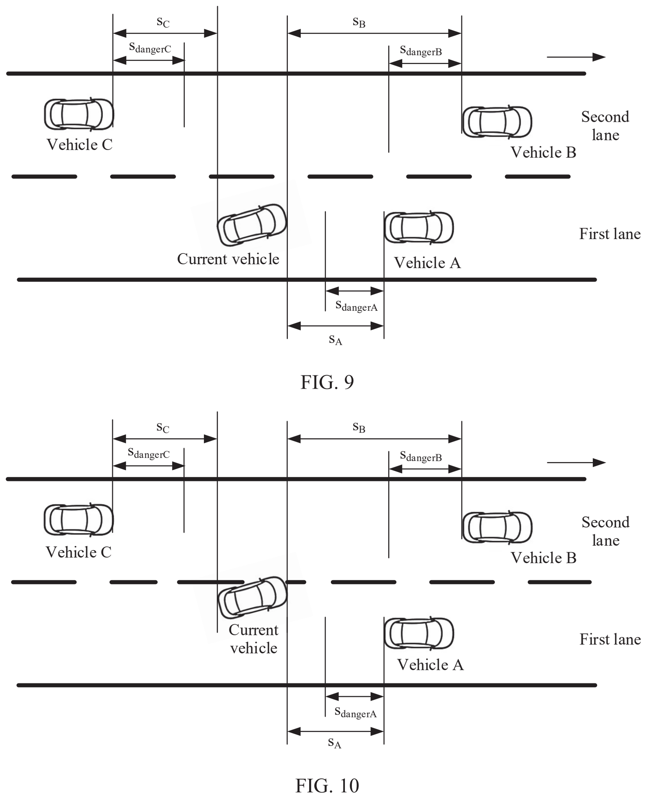

In an example, FIG. 9 shows a case in which the current vehicle is still on the first lane in the lane change process. The first longitudinal motion value is $a_x$, the second longitudinal motion value is $a_{x\_target}$, and the preset threshold is $\rho$. In this case, the lane change cancellation condition includes $a_{x\_target} - a_x < \rho$.

In a second case, the target vehicle has entered the second lane, and a gravity center or a geometric center of the target vehicle has not entered the second lane. In this case, the lane change cancellation condition includes that the second longitudinal motion value is less than or equal to the first longitudinal motion value.

In an example, FIG. 10 shows a case in which the current vehicle has entered the second lane and a gravity center or a geometric center of the current vehicle has not entered the second lane in the lane change process. The first longitudinal motion value is $a_x$, the second longitudinal motion value is $a_{x\_target}$, and the preset threshold is $\rho$. In this case, the channel change cancellation condition includes $a_{x\_target} \leq a_x$.

In a third case, the gravity center or the geometric center of the target vehicle has entered the second lane. In this case, the lane change cancellation condition includes that the absolute value of the difference between the first longitudinal motion value and the second longitudinal motion value is greater than or equal to the preset threshold.

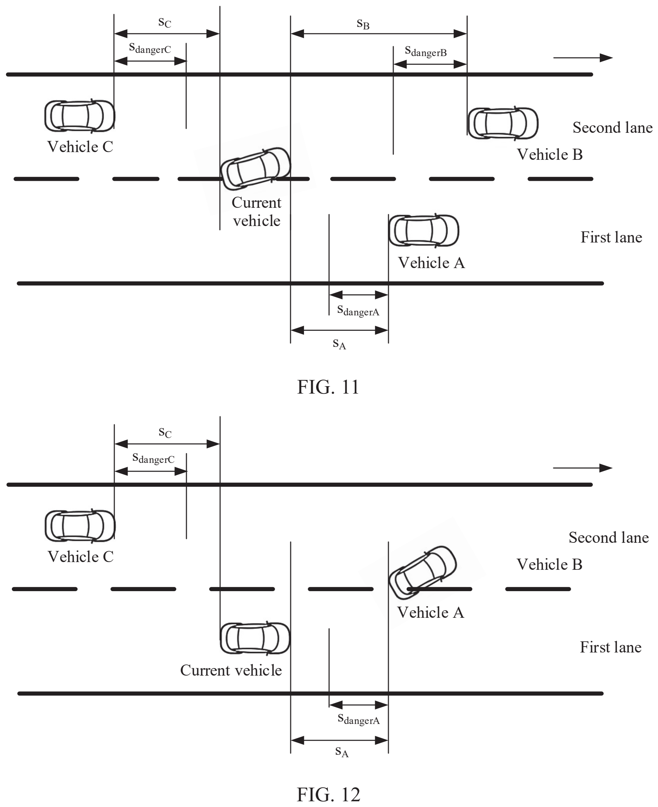

In an example, FIG. 11 shows a case in which the gravity center or the geometric center of the current vehicle has entered the second lane in the lane change process. The first longitudinal motion value is $a_x$, the second longitudinal motion value is $a_{x\_target}$, and the preset threshold is $\rho$. In this case, the channel change cancellation condition includes $a_x - a_{x\_target} \geq \rho$.

In another possible implementation, if an obstacle ahead (the first obstacle on the first lane or the second obstacle on the second lane) is implementing a lane change behavior between the first lane and the second lane when the target vehicle is ready to perform lane change, a constraint of the front obstacle on the target vehicle is imposed on both the first lane and the second lane. In this case, an eighth target function $J_{x6}$ and a ninth target function $J_{x6\_target}$ that are to be optimized are shown in the following formulas:

$$J_{x6} = (V_x - V_{xdes})^T Q_v (V - V_{xdes}) + d(1/s_A)^T Q_s d(1/s_A) + a_x^T R a_x;$$

and

$$J_{x6\_target} = (V_x - V_{xdes})^T Q_v (V - V_{xdes}) + d(1/s_A)^T Q_s d(1/s_A) + a_{x\_target}^T R a_{x\_target}$$

$$\text{Constraints are } s_A \geq s_{dangerA} \text{ and } s_C \geq s_{dangerC}.$$

It should be noted that for meanings of the parameters in the formulas, refer to descriptions of related parameters in other formulas described above. Details are not described herein again.

In an example, FIG. 12 shows a case in which when the current vehicle is ready to perform lane change, the vehicle A ahead is performing lane change from the first lane to the second lane.

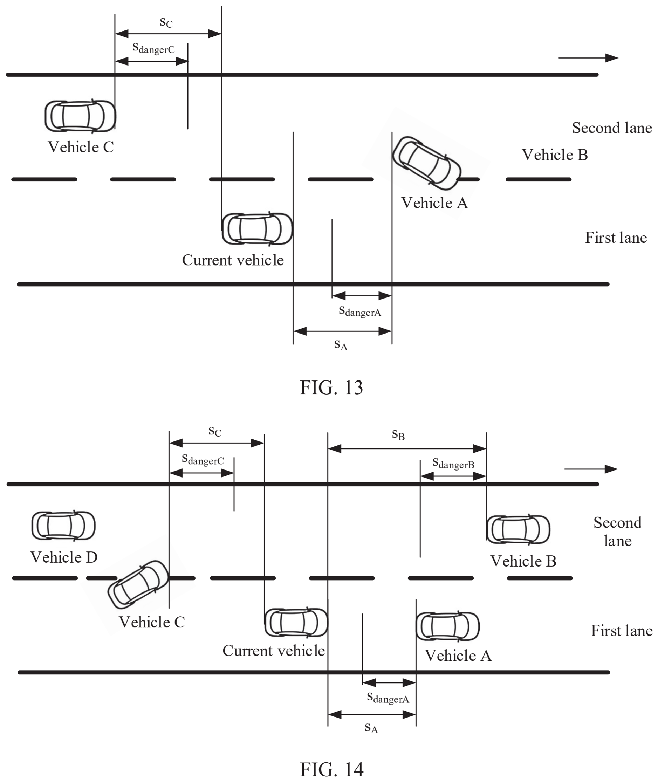

In another example, FIG. 13 shows a case in which when the current vehicle is ready to perform lane change, the vehicle A ahead is performing lane change from the second lane to the first lane.

Optionally, if the rear obstacle on the first lane is implementing a lane change behavior from the first lane to the second lane when the target vehicle is ready to perform lane change, a constraint of the rear obstacle on the first lane on the target vehicle is imposed on the second lane. If the rear obstacle on the first lane is implementing the lane change behavior from the first lane to the second lane, and there is a rear obstacle on the second lane, a target rear obstacle is determined, and a constraint of the target rear obstacle on the target vehicle is imposed on the second lane. The target rear obstacle is a rear obstacle closest to the target vehicle in the longitudinal direction in the rear obstacle on the first lane and the rear obstacle on the second lane.

It should be noted that for related details of imposing, on the second lane, the constraint of the target rear obstacle on the target vehicle, refer to related descriptions of imposing, on both the first lane and the second lane, the constraint of the front obstacle on the target vehicle. Details are not described herein again.

In an example, FIG. 14 shows a case in which when the current vehicle is ready to perform lane change, the rear vehicle C is performing lane change from the first lane to the second lane. In this case, there is a rear vehicle, namely, a vehicle D, of the current vehicle on the second lane, and if the vehicle D is after the vehicle C, a constraint of the vehicle C on the vehicle is imposed on the second lane.

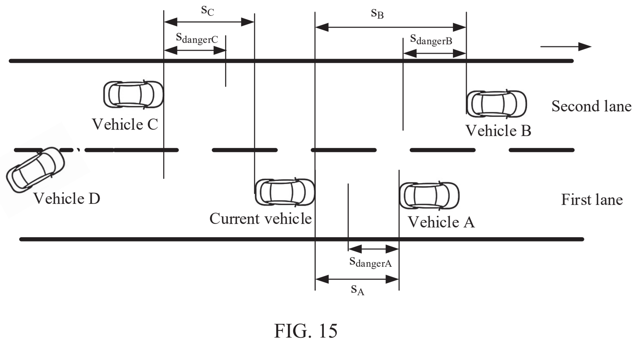

In another example, FIG. 15 shows a case in which when the current vehicle is ready to perform lane change, the rear vehicle D is performing lane change from the first lane to the second lane. In this case, there is a rear vehicle, namely, the vehicle C, of the current vehicle on the second lane, and if the vehicle C is before the vehicle D, a constraint of the vehicle C on the vehicle is imposed on the second lane.

In conclusion, embodiments of this application provide a lane change decision-making method based on longitudinal control for an intelligent vehicle. In an aspect, the lane change behavior is closely related to a longitudinal traveling status of a vehicle, and lane change decision-making is integrated with longitudinal control. This avoids redundancy of rule-based lane change decision-making, can flexibly adjust a policy when a traffic condition changes, and helps adapt to a complex and dynamic driving environment in high-order autonomous driving. In another aspect, in the lane change decision-making method provided in embodiments of this application, an intent and a preference of a driver/passenger can be fully and intuitively reflected. In another aspect, in the lane change decision-making method provided in embodiments of this application, a proper (that is, feasible and necessary) lane change occasion can be automatically selected while safety is ensured. This greatly improves traveling efficiency of the intelligent vehicle. In another aspect, in the lane change decision-making method provided in embodiments of this application, an expected acceleration/generalized force can be further calculated while a lane change decision is made. This can greatly reduce load of a trajectory planning layer, and save computing power.

Compared with a related technology, in this embodiment of this application, in terms of generation of a lane change intent, a willingness of a driver/passenger is considered. After the lane change intent is generated, the lane change feasibility and necessity are determined through longitudinal control, and lane change decision-making is integrated with longitudinal control, which is not considered in a solution of the related technology.

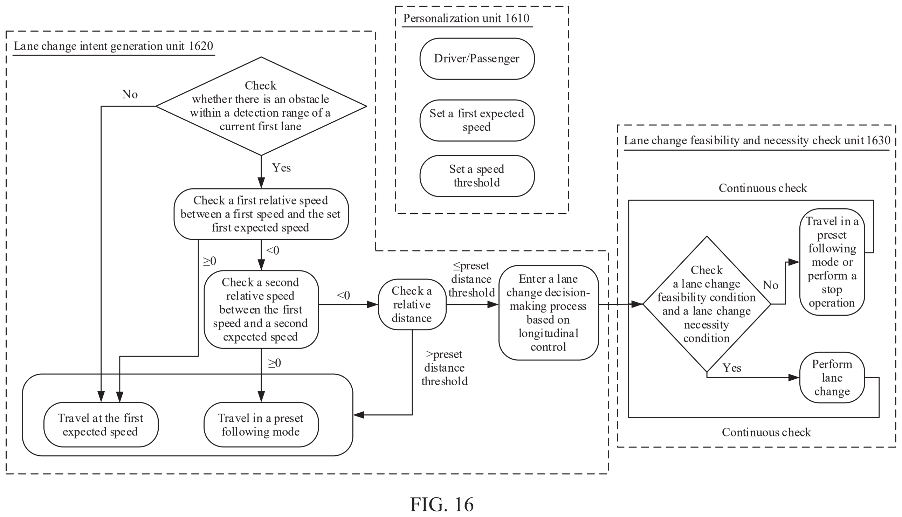

FIG. 16 is a diagram of a lane change decision-making module according to an example embodiment of this application. The lane change decision-making module includes a personalization unit 1610, a lane change intent generation unit 1620, and a lane change feasibility and necessity check unit 1630.

The personalization unit 1610 is configured to receive a first expected speed and a speed threshold that are autonomously set by a driver/passenger, where the speed threshold may determine a frequency at which a lane change intent is generated. After the first expected speed and the speed threshold are set, the electronic device automatically performs lane change based on the set first expected speed and the set speed threshold.

The lane change intent generation unit 1620 is configured to: check whether there is an obstacle (also referred to as a traffic participant) within a detection range of a current first lane; and if there is no obstacle, travel at the first expected speed, or if there is an obstacle, check a first relative speed between a first speed and the set first expected speed. If the first relative speed is greater than or equal to zero, the lane change intent generation unit travels at the first expected speed; or if the first relative speed is less than zero, the lane change intent generation unit checks a second relative speed between the first speed and a second expected speed. If the second relative speed is greater than or equal to zero, the lane change intent generation unit travels in a preset following mode; or if the second relative speed is less than zero, the lane change intent generation unit checks a relative distance between a target vehicle and a first obstacle on the first lane. If the relative distance is greater than a preset distance threshold, the lane change intent generation unit travels in the preset following mode; or if the relative distance is less than or equal to the preset distance threshold, the lane change intent generation unit enters a lane change decision-making process based on longitudinal control.

The lane change feasibility and necessity check unit 1630 is configured to check a lane change feasibility condition and a lane change necessity condition based on longitudinal traveling information. If the longitudinal traveling information meets the feasibility condition and the necessity condition, the lane change feasibility and necessity check unit performs lane change and continuously checks the feasibility condition and the necessity condition. If the longitudinal traveling information does not meet the feasibility condition or the necessity condition, the lane change feasibility and necessity check unit travels in the preset following mode or performs a stop operation, and continuously checks the feasibility condition and the necessity condition.

In conclusion, embodiments of this application provide a lane change decision-making method based on longitudinal control for an intelligent vehicle. In an aspect, for a problem of lane change efficiency on a basis of safety, in embodiments of this application, lane change feasibility and necessity are verified through longitudinal optimization control, the lane change feasibility is determined through longitudinal optimization control based on whether there is a solution to a target function corresponding to a second lane that is to be changed to, and the lane change necessity is determined by comparing an actual value of a target motion parameter of the target vehicle on the current first lane with a virtual value of a target motion parameter of the target vehicle on the second lane. A condition for proving necessity herein is not limited to an acceleration, and also includes a control value that can reflect a longitudinal motion status, for example, a generalized force. A lane change behavior is closely related to a longitudinal traveling status of a vehicle, and lane change decision-making is integrated with longitudinal control. This avoids redundancy of rule-based lane change decision-making, can flexibly adjust a policy when a traffic condition changes, and helps adapt to a complex and dynamic driving environment in high-order autonomous driving.

In addition, in the method provided in embodiments of this application, an expected acceleration/generalized force can be further calculated while a lane change decision is made. This can greatly reduce load of a trajectory planning layer, and save computing power.

In another aspect, for a personalization problem of the lane change behavior, in embodiments of this application, to satisfy an intent of a driver/passenger, in an intelligent driving system that can implement autonomous lane change, the driver/passenger autonomously sets the first expected speed. In addition, the driver/passenger may set the speed threshold to implement personalized setting of a lane change frequency. Therefore, in the lane change decision-making method provided in embodiments of this application, an intent and a preference of the driver/passenger can be fully and intuitively reflected.

In another aspect, for a problem of lane change efficiency, in embodiments of this application, in terms of generation of a lane change motivation, a speed close to the first expected speed of the driver/passenger as much as possible or a maximum speed specified in regulations is used as the lane change motivation while safety is ensured. This improves lane change efficiency.

Apparatus embodiments of this application are provided below, and may be configured to perform the method embodiments of this application. For details not disclosed in the apparatus embodiments of this application, refer to the method embodiments of this application.

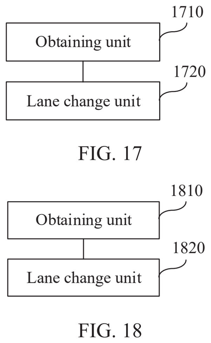

FIG. 17 is a block diagram of a lane change decision-making apparatus according to an example embodiment of this application. The apparatus may be implemented, by using software, hardware, or a combination thereof, as an entirety or a part of the electronic device provided in FIG. 1. The apparatus may include an obtaining unit 1710 and a lane change unit 1720.

The obtaining unit 1710 is configured to: on a first lane on which a target vehicle is located, obtain longitudinal traveling information of the target vehicle when there is a first obstacle in front of the target vehicle, where the longitudinal traveling information indicates traveling information of the target vehicle in a longitudinal direction, and the longitudinal direction is a direction parallel to a lane line of the first lane.

The lane change unit 1720 is configured to perform lane change when the longitudinal traveling information meets a preset lane change condition.

The preset lane change condition includes: a first relative speed is less than zero and a second relative speed is less than zero, where the first relative speed is a relative speed between a first speed and a set first expected speed, the second relative speed is a relative speed between the first speed and a second expected speed, the first speed is a speed of the first obstacle in the longitudinal direction, and the second expected speed is a difference between the first expected speed and a set speed threshold.

In a possible implementation, the preset lane change condition further includes: there is a solution to a target function corresponding to a second lane that is to be changed to, where the target function is established based on a relative speed and a relative distance between the target vehicle and a second obstacle on the second lane in the longitudinal direction.

In another possible implementation, the preset lane change condition further includes: an absolute value of a difference between a first longitudinal motion value and a second longitudinal motion value that are of the target vehicle is greater than a preset threshold.

The first longitudinal motion value is an actual value of a target motion parameter of the target vehicle on the first lane, the second longitudinal motion value is a virtual value of a target motion parameter of the target vehicle on the second lane, and the target motion parameter includes a motion parameter of the target vehicle in the longitudinal direction.

In another possible implementation, the target motion parameter includes an acceleration or a generalized force of the target vehicle in the longitudinal direction.

In another possible implementation, the apparatus further includes:

a traveling unit, configured to: when there is no solution to the target function, or the absolute value of the difference between the first longitudinal motion value and the second longitudinal motion value is less than or equal to the preset threshold, travel in a preset following mode, where the preset following mode means that a distance between the target vehicle and the first obstacle on the first lane remains within a preset distance range.

In another possible implementation, the apparatus further includes:

a stopping unit, configured to: when there is no solution to the target function, or the absolute value of the difference between the first longitudinal motion value and the second longitudinal motion value is less than or equal to the preset threshold, perform a stop operation if the first obstacle on the first lane is a static obstacle.

In another possible implementation, the apparatus further includes a first lane change cancellation unit, configured to:

in a lane change process, solve the target function in real time or at a preset time interval; and
cancel lane change when there is no solution to the target function.

In another possible implementation, the apparatus further includes a second lane change cancellation unit, configured to:

in the lane change process, determine, in real time or at a preset time interval, whether a lane change cancellation condition is met; and
cancel lane change if the lane change cancellation condition is met.

The lane change cancellation condition includes:

the target vehicle is still on the first lane, and the absolute value of the difference between the second longitudinal motion value and the first longitudinal motion value is less than the preset threshold; and/or
the target vehicle has entered the second lane, a gravity center or a geometric center of the target vehicle has not entered the second lane, and the second longitudinal motion value is less than or equal to the first longitudinal motion value; and/or
the gravity center or the geometric center of the target vehicle has entered the second lane, and the absolute value of the difference between the first longitudinal motion value and the second longitudinal motion value is greater than or equal to the preset threshold.

In another possible implementation, the preset lane change condition further includes: a first relative distance is less than or equal to a preset distance threshold, where the first relative distance is a relative distance between the target vehicle and the first obstacle on the first lane in the longitudinal direction.

In another possible implementation, the apparatus further includes:
the traveling unit, configured to: when the first relative distance is greater than the preset distance threshold, travel in the preset following mode, where the preset following mode means that the distance between the target vehicle and the first obstacle remains within the preset distance range.

In another possible implementation, the apparatus further includes:
the traveling unit, configured to: when the first relative speed is greater than or equal to zero, travel at the first expected speed.

In another possible implementation, the apparatus further includes:
the traveling unit, configured to: when the first relative speed is less than zero and the second relative speed is greater than or equal to zero, travel in the preset following mode, where the preset following mode means that the distance between the target vehicle and the first obstacle remains within the preset distance range.

It should be noted that when the apparatus provided in the foregoing embodiment implements functions of the apparatus, division of the foregoing functional modules is only used as an example for description. In actual application, the foregoing functions may be allocated to different functional modules for implementation as required, that is, an internal structure of a device is divided into different functional modules, to implement all or some of the functions described above. In addition, the apparatuses provided in the foregoing embodiments and the method embodiments belong to a same concept. For specific implementation processes thereof, refer to the method embodiments. Details are not described herein again.

FIG. 18 is a block diagram of a lane change decision-making apparatus according to another example embodiment of this application. The apparatus may be implemented, by using software, hardware, or a combination thereof, as an entirety or a part of the electronic device provided in FIG. 1. The apparatus may include an obtaining unit 1810 and a lane change unit 1820.

The obtaining unit 1810 is configured to: on a first lane on which a target vehicle is located, obtain longitudinal traveling information of the target vehicle when there is a first obstacle in front of the target vehicle, where the longitudinal traveling information indicates traveling information of the target vehicle in a longitudinal direction, and the longitudinal direction is a direction parallel to a lane line of the first lane.

The lane change unit 1820 is configured to perform lane change when the longitudinal traveling information meets a preset lane change condition, where the preset lane change condition includes: there is a solution to a target function corresponding to a second lane that is to be changed to, where the target function is established based on a relative speed and a relative distance between the target vehicle and a second obstacle on the second lane in the longitudinal direction.

In a possible implementation, the preset lane change condition further includes: an absolute value of a difference between a first longitudinal motion value and a second longitudinal motion value that are of the target vehicle is greater than a preset threshold.

The first longitudinal motion value is an actual value of a target motion parameter of the target vehicle on the first lane, the second longitudinal motion value is a virtual value of a target motion parameter of the target vehicle on the second lane, and the target motion parameter includes a motion parameter of the target vehicle in the longitudinal direction.

In another possible implementation, the target motion parameter includes an acceleration or a generalized force of the target vehicle in the longitudinal direction.

In another possible implementation, the apparatus further includes:
a traveling unit, configured to: when there is no solution to the target function, or the absolute value of the difference between the first longitudinal motion value and the second longitudinal motion value is less than or equal to the preset threshold, travel in a preset following mode, where the preset following mode means that a distance between the target vehicle and the first obstacle on the first lane remains within a preset distance range.

In another possible implementation, the apparatus further includes:
a stopping unit, configured to: when there is no solution to the target function, or the absolute value of the difference between the first longitudinal motion value and the second longitudinal motion value is less than or equal to the preset threshold, perform a stop operation if the first obstacle on the first lane is a static obstacle.

In another possible implementation, the apparatus further includes a first lane change cancellation unit, configured to:

in a lane change process, solve the target function in real time or at a preset time interval; and

cancel lane change when there is no solution to the target function.

In another possible implementation, the apparatus further includes a second lane change cancellation unit, configured to:

in the lane change process, determine, in real time or at a preset time interval, whether a lane change cancellation condition is met; and
cancel lane change if the lane change cancellation condition is met.

The lane change cancellation condition includes:

the target vehicle is still on the first lane, and the absolute value of the difference between the second longitudinal motion value and the first longitudinal motion value is less than the preset threshold; and/or
the target vehicle has entered the second lane, a gravity center or a geometric center of the target vehicle has not entered the second lane, and the second longitudinal motion value is less than or equal to the first longitudinal motion value; and/or
the gravity center or the geometric center of the target vehicle has entered the second lane, and the absolute value of the difference between the first longitudinal motion value and the second longitudinal motion value is greater than or equal to the preset threshold.

In another possible implementation, the apparatus further includes the lane change unit 1820, further configured to:

obtain a first speed of the first obstacle, where the first speed is a speed of the first obstacle in the longitudinal direction;
determine a first relative speed between the first speed and a set first expected speed and a second relative speed between the first speed and a second expected speed, where the second expected speed is a difference between the first expected speed and a set speed threshold; and
when the first relative speed is less than zero and the second relative speed is less than zero, perform the step of performing lane change when the longitudinal traveling information meets the preset lane change condition.

In another possible implementation, the apparatus further includes the lane change unit 1820, further configured to:

when the first relative speed is less than zero and the second relative speed is less than zero, determine a first relative distance, where the first relative distance is a relative distance between the target vehicle and the first obstacle on the first lane in the longitudinal direction; and
when the first relative distance is less than or equal to a preset distance threshold, perform the step of performing lane change when the longitudinal traveling information meets the preset lane change condition.

In another possible implementation, the apparatus further includes:
the traveling unit, configured to: when the first relative distance is greater than the preset distance threshold, travel in the preset following mode, where the preset following mode means that the distance between the target vehicle and the first obstacle remains within the preset distance range.
In another possible implementation, the apparatus further includes:
the traveling unit, configured to: when the first relative speed is greater than or equal to zero, travel at the first expected speed.
In another possible implementation, the apparatus further includes:
the traveling unit, configured to: when the first relative speed is less than zero and the second relative speed is greater than or equal to zero, travel in the preset following mode, where the preset following mode means that the distance between the target vehicle and the first obstacle remains within the preset distance range.
It should be noted that, when the apparatus provided in the foregoing embodiments implements the functions of the apparatus, division of the foregoing function modules is only used as an example for description. In actual application, the foregoing functions may be allocated to different function modules for implementation as required, that is, an inner structure of a device is divided into different function modules, to implement all or some of the functions described above. In addition, the apparatuses provided in the foregoing embodiments and the method embodiments belong to a same concept. For specific implementation processes thereof, refer to the method embodiments. Details are not described herein again.

An embodiment of this application provides a lane change decision-making apparatus. The lane change decision-making apparatus includes a processor and a memory configured to store instructions executable by the processor. The processor is configured to implement the lane change decision-making method performed by the electronic device in the foregoing embodiments when executing the instructions.

An embodiment of this application provides a computer program product. The computer program product includes computer-readable code or a non-volatile computer-readable storage medium carrying the computer-readable code. When the computer-readable code is run in an electronic device, the processor in the electronic device performs the lane change decision-making method performed by the electronic device in the foregoing embodiments.

An embodiment of this application provides a non-volatile computer-readable storage medium. The non-volatile computer-readable storage medium stores computer program instructions. When the computer program instructions are executed by a processor, the lane change decision-making method performed by the electronic device in the foregoing embodiments is implemented.

The computer-readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. More specific examples (non-exhaustive list) of the computer-readable storage medium include: a portable computer disk, a hard disk, a random-access memory (Random-Access Memory, RAM), a read-only memory (Read-Only Memory, ROM), an erasable programmable read-only memory (Electrically Programmable Read-Only Memory, EPROM, or flash memory), a static random-access memory (Static Random-Access Memory, SRAM), a portable compact disk read-only memory (Compact Disc Read-Only Memory, CD-ROM), a digital video disk (Digital Video Disc, DVD), a memory stick, a floppy disk, a mechanical coding device, for example, a punching card or a groove protrusion structure that stores instructions, and any suitable combination thereof.

Computer-readable program instructions or code described herein can be downloaded to respective computing/processing devices from a computer-readable storage medium, or downloaded to an external computer or external storage device via a network, such as the Internet, a local area network, a wide area network and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions used to perform the operations in this application may be assembly instructions, instruction set architecture (Instruction Set Architecture, ISA) instructions, machine instructions, machine-related instructions, microcode, firmware instructions, status setting data, or source code or object code written in any combination of one or more programming languages. The programming languages include an object-oriented programming language such as Smalltalk and C++, and a conventional procedural programming language such as a "C" language or a similar programming language. The computer-readable program instructions may be executed entirely on a user computer, partly on the user computer, as a stand-alone software package, partly on the user computer and partly on a remote computer, or entirely on the remote computer or a server. In a case involving a remote computer, the remote computer may be connected to a user computer over any kind of network, including a local area network (Local Area Network, LAN) or a wide area network (Wide Area Network, WAN), or may be connected to an external computer (for example, connected over Internet using an Internet service provider). In some embodiments, an electronic circuit, for example, a programmable logic circuit, a field-programmable gate array (Field-Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processor of a general-purpose computer, a dedicated computer, or another programmable data processing apparatus to produce a machine, so that the instructions, when executed by the processor of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/acts specified in the one or more blocks in the flowcharts and/or the block diagrams.

The computer-readable program instructions may alternatively be loaded onto a computer, another programmable data processing apparatus, or another device so that a series of operation steps are performed on the computer, the another programmable data processing apparatus, or the another device to produce a computer-implemented process. Therefore, the instructions executed on the computer, the another programmable data processing apparatus, or the another device implements the functions/acts specified in the one or more blocks in the flowcharts and/or block diagrams.

The flowcharts and block diagrams in the accompanying drawings show possible implementations of system architectures, functions, and operations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function involved.

It should also be noted that each block in the block diagrams and/or flowcharts, and a combination of blocks in the block diagrams and/or flowcharts may be implemented by hardware (for example, a circuit or an ASIC (application-specific integrated circuit, application-specific integrated circuit)) that performs a corresponding function or action, or may be implemented by a combination of hardware and software, for example, firmware.

Although this application is described herein with reference to embodiments, in a process of implementing this application that claims protection, a person skilled in the art may understand and implement other variations of the disclosed embodiments by viewing the accompanying drawings, the disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

The foregoing has described embodiments of this application. The foregoing descriptions are examples, not exhaustive, and are not limited to the disclosed embodiments. Many modifications and changes are apparent to those of ordinary skill in the art without departing from the scope and spirit of the illustrated embodiments. The selection of terms used herein is intended to best explain the principles of embodiments, practical applications, or improvements to technologies in the market, or to enable another person of ordinary skill in the art to understand embodiments disclosed herein.

**Claims**

1. A lane change decision-making method, wherein the method comprises:

   obtaining a first longitudinal motion value, wherein the first longitudinal motion value is an actual value of a target motion parameter of a target vehicle on a first lane;
   obtaining a second longitudinal motion value, wherein the second longitudinal motion value is a virtual value of the target motion parameter of the target vehicle on a second lane that is to be changed to, and the second longitudinal motion value is obtained based on a second obstacle on the second lane; and
   performing a lane change when the target vehicle satisfies a preset lane change condition;
   wherein the preset lane change condition comprises: an absolute value of a difference between the first longitudinal motion value and the second longitudinal motion value is greater than a preset threshold; the target motion parameter comprises a motion parameter of the target vehicle in the longitudinal direction; and the longitudinal direction is a direction parallel to a lane line of the first lane.

2. The method according to claim 1, wherein the method further comprises:

   obtaining a set first expected speed and a speed threshold value;
   obtaining a second expected speed, wherein the second expected speed is a difference between the first expected speed and the speed threshold value;
   obtaining the second longitudinal motion value when a first obstacle exists in front of the target vehicle and a first speed of the first obstacle is lower than the second expected speed;
   wherein the first speed is a speed of the first obstacle in the longitudinal direction.

3. The method according to claim 2, wherein the first expected speed and the speed threshold value are preset by a driver or a passenger of the target vehicle.

4. The method according to any one of claims 1 to 3, wherein obtaining the second longitudinal motion value comprises: obtaining the second longitudinal motion value according to a relative speed and a relative distance between the target vehicle and the second obstacle on the second lane in the longitudinal direction.

5. The method according to any one of claims 1 to 4, wherein the second obstacle on the second lane comprises a third obstacle on the second lane in front of the target vehicle and a fourth obstacle on the second lane behind the target vehicle; and obtaining the second longitudinal motion value comprises: obtaining the second longitudinal motion value according to a relative speed and a relative distance between the target vehicle and the third obstacle in the longitudinal direction, and a relative speed and a relative distance between the target vehicle and the fourth obstacle in the longitudinal direction.

6. The method according to any one of claims 1 to 5, wherein obtaining the second longitudinal motion value comprises:

    obtaining the second longitudinal motion value according to a relative speed and a relative distance between the target vehicle and the first obstacle on the first lane in the longitudinal direction, and a relative speed and a relative distance between the target vehicle and the second obstacle in the longitudinal direction, when the first obstacle on the first lane satisfies a preset condition;
    wherein the preset condition comprises: the first obstacle is in a process of changing lanes from the first lane to the second lane.

7. The method according to any one of claims 1 to 6, wherein the method further comprises:

    during a lane change process, determining whether a lane change cancellation condition is satisfied at a preset time interval; and
    canceling the lane change if the lane change cancellation condition is satisfied; wherein the lane change cancellation condition comprises:

        the target vehicle is still on the first lane, and an absolute value of a difference between the second longitudinal motion value and the first longitudinal motion value is less than the preset threshold; and/or
        the target vehicle has entered the second lane and a center of gravity or a geometric center of the target vehicle has not entered the second lane, and the second longitudinal motion value is less than or equal to the first longitudinal motion value; and/or
        the center of gravity or the geometric center of the target vehicle has entered the second lane, and an absolute value of a difference between the first longitudinal motion value and the second longitudinal motion value is greater than or equal to the preset threshold.

8. The method according to any one of claims 1 to 7, wherein the target motion parameter comprises an acceleration or a generalized force of the target vehicle in the longitudinal direction, and the generalized force comprises a longitudinal force and/or a driving torque.

9. A lane change decision-making apparatus, wherein the apparatus comprises:

    a processor; and
    a memory, configured to store instructions executable by the processor, wherein
    the processor is configured to implement the method according to any one of claims 1 to 8 when executing the instructions.

10. A non-volatile computer-readable storage medium, storing computer program instructions, wherein when the computer program instructions are executed by a processor, the method according to any one of claims 1 to 8 is implemented.

11. A computer program product, wherein the computer program product comprises computer-readable code or a non-volatile computer-readable storage medium carrying the computer-readable code, and when the computer-readable code is run on an electronic device, a processor in the electronic device performs the method according to any one of claims 1 to 8.

12. A vehicle, wherein the vehicle comprises:

a processor; and
a memory, configured to store instructions executable by the processor, wherein
the processor is configured to implement the method according to any one of claims 1 to 8 when executing the
instructions.

Server 20 ←- - - - -→ Vehicle 21

Sensor 22

Autonomous driving system 23

Human-machine interface 24

FIG. 1

| On a first lane on which a target vehicle is located, obtain longitudinal traveling information of the target vehicle when there is a first obstacle in front of the target vehicle, where the longitudinal traveling information indicates traveling information of the target vehicle in a longitudinal direction, and the longitudinal direction is a direction parallel to a lane line of the first lane | 201 |

| Perform lane change when the longitudinal traveling information meets a preset lane change condition, where the preset lane change condition includes: a first relative speed is less than zero and a second relative speed is less than zero, where the first relative speed is a relative speed between a first speed and a set first expected speed, the second relative speed is a relative speed between the first speed and a second expected speed, the first speed is a speed of the first obstacle in the longitudinal direction, and the second expected speed is a difference between the first expected speed and a set speed threshold | 202 |

FIG. 2

On a first lane on which a target vehicle is located, when there is a first obstacle in front of the target vehicle, obtain a first speed of the first obstacle, where the first speed is a speed of the first obstacle in a longitudinal direction, and the longitudinal direction is a direction parallel to a lane line of the first lane

301

Determine a first relative speed between the first speed and a set first expected speed and a second relative speed between the first speed and a second expected speed, where the second expected speed is a difference between the first expected speed and a set speed threshold

302

When the first relative speed is less than zero and the second relative speed is less than zero, determine, based on longitudinal traveling information, whether to perform lane change, where the longitudinal traveling information indicates traveling information of the target vehicle in the longitudinal direction

303

FIG. 3

Obtain road condition information of current traveling of a target vehicle, where the road condition information indicates an obstacle status on a current first lane within a perception range of the target vehicle — 401

Determine whether the road condition information indicates that there is a first obstacle in front of the target vehicle on the first lane — 402

No → Travel at a first expected speed — 403

Yes ↓

Determine whether a first relative speed between a first speed and a set first expected speed is less than zero — 404

No → Travel at the first expected speed — 405

Yes ↓

Determine whether a second relative speed is less than zero — 406

No → Travel in a preset following mode — 407

Yes ↓

TO
FIG. 4B

FIG. 4A

CONT.
FROM
FIG. 4A

Determine
that a first relative distance is
less than or equal to a preset
distance threshold

408

No

Yes

Travel in a preset following
mode

409

Determine
whether longitudinal traveling
information meets a preset lane
change condition

410

No

Yes

Travel in a preset following
mode or perform a stop
operation

412

Perform lane change

411

FIG. 4B

FIG. 5

FIG. 6

FIG. 7

FIG. 8

$s_C$
$s_{dangerC}$
$s_B$
$s_{dangerB}$

Vehicle C

Second lane

Vehicle B

First lane

Current vehicle

Vehicle A

$s_{dangerA}$
$s_A$

FIG. 9

$s_C$
$s_{dangerC}$
$s_B$
$s_{dangerB}$

Vehicle C

Second lane

Vehicle B

Current vehicle

First lane

Vehicle A

$s_{dangerA}$
$s_A$

FIG. 10

$s_C$

$s_{dangerC}$

$s_B$

$s_{dangerB}$

Vehicle C

Second lane

Vehicle B

Current
vehicle

First lane

Vehicle A

$s_{dangerA}$

$s_A$

FIG. 11

$s_C$

$s_{dangerC}$

Vehicle C

Second lane

Vehicle B

Vehicle A

Current vehicle

First lane

$s_{dangerA}$

$s_A$

FIG. 12

FIG. 13

FIG. 14

FIG. 15

Personalization unit 1610

Driver/Passenger

Set a first expected speed

Set a speed threshold

Lane change intent generation unit 1620

Check whether there is an obstacle within a detection range of a current first lane

No

Yes

Check a first relative speed between a first speed and the set first expected speed

≥0

<0

Check a second relative speed between the first speed and a second expected speed

<0

≥0

Check a relative distance

≤preset distance threshold

>preset distance threshold

Enter a lane change decision-making process based on longitudinal control

Travel at the first expected speed

Travel in a preset following mode

Lane change feasibility and necessity check unit 1630

Continuous check

Check a lane change feasibility condition and a lane change necessity condition

No

Yes

Travel in a preset following mode or perform a stop operation

Perform lane change

Continuous check

FIG. 16

1710

| Obtaining unit |
|---|

1720

| Lane change unit |
|---|

FIG. 17

1810

| Obtaining unit |
|---|

1820

| Lane change unit |
|---|

FIG. 18